(19) Europäisches Patentamt / European Patent Office / Office européen des brevets

(11) **EP 2 023 566 B1**

(12) **EUROPEAN PATENT SPECIFICATION**

(45) Date of publication and mention
of the grant of the patent:
**21.09.2011 Bulletin 2011/38**

(51) Int Cl.:
*H04L 29/06* (2006.01)

(21) Application number: **07114046.1**

(22) Date of filing: **08.08.2007**

(54) **Online security rules conflict management**

Online Verwaltung von Sicherheitsregelkonflikten

Gestion en ligne des conflits de règles de sécurité

(84) Designated Contracting States:
**AT BE BG CH CY CZ DE DK EE ES FI FR GB GR
HU IE IS IT LI LT LU LV MC MT NL PL PT RO SE
SI SK TR**

(43) Date of publication of application:
**11.02.2009 Bulletin 2009/07**

(73) Proprietors:
• **MITSUBISHI ELECTRIC CORPORATION**
**Chiyoda-ku**
**Tokyo 100-8310 (JP)**
Designated Contracting States:
**AT BE BG CH CY CZ DE DK EE ES FI GB GR HU
IE IS IT LI LT LU LV MC MT NL PL PT RO SE SI
SK TR**
• **Mitsubishi Electric R&D Centre Europe B.V.**
**1119 NS Schiphol Rijk (NL)**
Designated Contracting States:
**FR**

(72) Inventor: **Bouzida, Yacine**
**35200 Rennes (FR)**

(74) Representative: **Cabinet Plasseraud**
**52, rue de la Victoire**
**75440 Paris Cedex 09 (FR)**

(56) References cited:
**US-A1- 2006 294 577**

• **EHAB S. AL-SHAER, HAZEM H. HAMED:
"FIREWALL POLICY ADVISOR FOR ANOMALY
DISCOVERY AND RULE EDITING"[Online] 4 April
2003 (2003-04-04), XP002463654 Multimedia
Networking Research Laboratory School of
Computer Science, Telecommunications and
Information Systems, DePaul University,
Chicago, USA Retrieved from the Internet: URL:
http://www.mnlab.cs.depaul.edu/~ehab/p
apers/im03-cr.pdf> [retrieved on 2008-01-07]**
• **AL-SHAER E ET AL: "Conflict Classification and
Analysis of Distributed Firewall Policies" IEEE
JOURNAL ON SELECTED AREAS IN
COMMUNICATIONS, IEEE SERVICE CENTER,
PISCATAWAY, US, vol. 23, no. 10, October 2005
(2005-10), pages 2069-2084, XP011140074 ISSN:
0733-8716**
• **AL-SHAER E S ET AL: "Discovery of policy
anomalies in distributed firewalls" INFOCOM
2004. TWENTY-THIRD ANNUALJOINT
CONFERENCE OF THE IEEE COMPUTER AND
COMMUNICATIONS SOCIETIES HONG KONG,
PR CHINA 7-11 MARCH 2004, PISCATAWAY, NJ,
USA,IEEE, vol. 4, 7 March 2004 (2004-03-07),
pages 2605-2616, XP010740626 ISBN:
0-7803-8355-9**

**Description**

TECHNICAL FIELD

The present invention relates to a conflict management method that can be used for detecting different anomalies present in a set of access control rules, when a new access control rule is added for updating an existing conflict management tree or building a new conflict management tree. Such access control rules can be used for instance in an electronic device for filtering incoming and outgoing traffic, in operating systems for managing file access, in attack signature databases for intrusion detection, in email applications for managing rules or in industrial mechanisms. The invention equally relates to such an electronic device and to a computer program arranged to implement the method.

BACKGROUND OF THE INVENTION

Current security mechanisms implemented in communication systems use a large number of techniques in order to filter packets in access control systems where many rules are specified for this task. Intrusion detection systems also use a set of rules to match different flows captured from the monitored network with the current known attacks that are described in a set of rules. The task of writing a rule; may it be for the access control goal or intrusion detection goal, is not a hard task. However, dealing with a large set of rules and discovering whether there are rules that are never tested or others that are redundant is not an easy task particularly when dealing with numerous rules written by successive administrators.

Security rules should be carefully written and well organized to answer the security policy specification. Since this is not an easy task that could be resolved by an operator, novel and fast automatic methods should be introduced to overcome this problem. Moreover, the administrator should be given exact information about the type of misconfiguration and the set of rules that conducted to such a misconfiguration.

Many current companies, governmental, academia and military agencies use a set of components to secure their information systems. Firewalls are the most used security equipment to filter and police the traffic traversing different zones of trust in an organization. Internet for example is considered as a zone with no trust and all the incoming and outgoing traffic to the Internet should be controlled with appropriate filtering rules to prevent attacks.

Although firewalls provide a powerful solution to filter traffic and control the flows traversing the different zones considered in an organization, their appropriate configuration according to the defined security policy remains a hard task. There are different reasons that make handling correct rules according to the target security policy difficult. First, the different firewalls of an organization may be installed in its different sub-organizations that are located in different places, countries and continents. Second, hundreds or thousands of rules are specified in the different firewalls or other security equipment pieces that may be written by different administrators along the time. Finally, updating the different rules according to new security policies by adding or removing rules renders the task of the administrator almost impractical. For all of these reasons, efficient techniques should be introduced to help administrators to verify, analyze and correct the different rules that are introduced.

There are various systems that try to solve the firewall misconfiguration problem. While these systems use different methods for detecting the different anomalies, they share approximately the same problems for detecting these anomalies.

A publication entitled "Discovery of Policy Anomalies in Distributed Firewalls" by Ehab S. Al-Shaer and Hazem H. Hamed, IEEE INFOCOM 2004, discloses a method for detecting anomalies, but this method does not detect all the anomalies that may exist when considering all the rules presented by an operator, because that detection approach is based on comparing the rules two by two.

The following illustrative example with only one conditional attribute dIP (destination IP) can be considered:

$R_1$: dIP ∈ [40-90]→ accept;
$R_2$: dIP ∈ [80-120]→ deny;
$R_3$: dIP ∈ [50-110]→ accept.

In the above rule set dIP denotes destination internet protocol (IP) address. In this case the proposed method does not detect the complete shadowing of rule $R_3$ because of the union of rules $R_1$ and $R_2$. A rule set contains a complete shadowing anomaly if there exists at least a rule that never applies because all the packets that this rule matches are already matched by a prior rule or a combination of rules that have higher priority in order.

A publication entitled "Detection and Removal of Firewall Misconfiguration" by F. Cuppens, N. Cuppens-Boulahia, and J. García-Alfaro, IASTED International Conference on Communication, Network and Information Security (CNIS 2005) discloses another solution that solves the above problem, but this method also has many shortcomings. An ambiguous definition of redundancy was introduced. As a matter of fact, if there are two rules that have the same attribute values, then the first one is considered as a redundant rule and so on if there are more than two identical rules. For this reason, the shadowing detection is considered before redundancy to restrict this shortcoming. However, if (1) one rule has higher priority in order than a set of one or more rules with lower priority with the same decision, and (2) all packets that the first rule matches are also matched by the combination of the other rules(s), and (3) the conditional attribute values of the first rule are strictly included in the conditional attribute values of the rules with lower priority, then the first rule is detected as redundant. In addition to this, if one rule set is considered and the rules are reordered then some anomalies might not be detected in the second rule set while they are detected in the first one and vice versa. The following rule set is an example that illustrates these two problems:

$R_1$: dIP $\in$ [20-90] $\rightarrow$ accept;
$R_2$: dIP $\in$ [40-120] $\rightarrow$ deny;
$R_3$: dIP $\in$ [10-55] $\rightarrow$ accept;
$R_4$: dIP $\in$ [30-110] $\rightarrow$ accept.

In this example, rule $R_1$ is detected as a redundant one due to the combination of rules $R_3$ and $R_4$. However, if the order of the rules $R_1$ and $R_3$ is altered as presented in the following, then $R_1$ is not detected as redundant even if it is actually redundant because if it is deleted from the list presented below, the result of filtering remains unchanged.
$R_3$: dIP $\in$ [10-55] $\rightarrow$ accept;
$R_2$: dIP $\in$ [40-120] $\rightarrow$ deny;
$R_1$ : dIP $\in$ [20-90] $\rightarrow$ accept;
$R_4$: dIP $\in$ [30-110] $\rightarrow$ accept.
This situation is due to the ambiguity of that approach. That approach takes the different algorithms ahead rather than considering a real definition of redundancy. In addition to this, the execution order of the different rules is not kept according to the original rule set.
A special difficulty arises, if the administrator already has a set of security rules, but he has to add a new rule to the existing set. The task is even more difficult, if the rule set has to be updated online and conflicts detected online as well. Online updating means that rules can be added at any time instant. For instance if the algorithm described in the publication "Detection and Removal of Firewall Misconfiguration" is applied to online detection, the final result might not be the same as the result when applying this algorithm offline. This is due to the definition ambiguities. Moreover, different algorithms should be applied over all the rules for each new rule that is introduced online. However, this would be time consuming. Therefore, that method is not appropriate for online anomaly detection because of these two main drawbacks: time consumption and varying results. In addition, that method does not have memory keeping feature to save all the rules. Online conflict management is an innovative method that allows the detection of all possible anomalies step by step as long as the administrator introduces a new rule. Each time a new rule is introduced, the administrator is directly warned about the misconfiguration if there is any. Thus, when performing the misconfiguration detection online, the method is launched once a new rule is added.
A scientific publication entitled "Firewall policy advisor for anomaly discovery and rule editing", 4 April 2003 by E. Al-Shaer and H. Hamed, XP-002463654, Multimedia Networking Research Laboratory School of Computer Science, Telecommunications and Information Systems, DePaul University, Chicago USA discloses a set of techniques and algorithms that provide automatic discovery of firewall policy anomalies to reveal rule conflicts and potential problems in legacy firewalls, and anomaly-free policy editing for rule insertion, removal and modification.
A scientific publication entitled "Conflict classification and analysis of distributed firewall policies", IEEE JOURNAL ON SELECTED AREAS IN COMMUNICATIONS, vol. 23, No. 10, October 2005 by E. Al-Shaer et al. discloses a set of techniques and algorithms to automatically discover policy anomalies in centralized and distributed firewalls.
United States patent application publication 2006/0294577 discloses a system, computer-implementable method and computer usable medium for resolving discrepancies between diverse firewall designs.
Thus, there is a need for an improved online method for detecting and managing security rule conflicts.

SUMMARY OF THE INVENTION

According to a first aspect of the invention there is thus proposed an online conflict management method as recited in claim 1.
The proposed invention introduces a new method that is able to find all possible misconfigurations of different security rules that are specified by an administrator to filter inbound and outbound traffic traversing the considered filtering equipment or access rights when considering file access rights in operating system. There are many advantages of this mechanism when compared to other solutions. The proposed method is independent of rules reordering, i.e. rules priority. The method finds all possible anomalies; redundancy, shadowing, etc. Different anomalies can also be precisely presented to the administrator. Thus, all rules and their attribute range values that contributed to the anomaly can be precisely shown to the administrator for further investigation. Therefore, the administrator of the network element can be warned about all misconfigurations and it is up to him to choose the best rule set free of errors according to a priori defined policy. It is also possible to a priori tune the method so that the method gives automatically one possible rule set free of errors according to the administrator's choice.

The proposed method has also the advantage of "rules memory keeping". This method not only finds all misconfiguration anomalies and possibilities but also keeps at the same time the original rule set in its data structure as described later on. Furthermore, the method is invariant to updating of the rules. In contrast to other methods that give blindly the final rule set free of their corresponding anomalies, the proposed method keeps the original rule set while finding the different anomalies. The proposed method gives the same result irrespective of the order of the rules and all the anomalies are found while other methods depend on the last rules that are generated and the new rule that is added or omitted. Moreover, the proposed method makes it possible to update the rule set online. Thus, the administrator can be warned about all anomalies while he is introducing new rules in front of his console.

According to a second aspect of the invention there is further provided a computer program product according to claim 11 comprising instructions for implementing the method according to the first aspect, when loaded and run on computer means of an electronic device that is able to manage the detected conflicts.

According to a third aspect of the invention there is provided a communication network element capable of managing conflicts as recited in claim 12.

BRIEF DESCRIPTION OF THE DRAWINGS

Other features and advantages of the invention will become apparent from the following description of non-limiting exemplary embodiments, with reference to the appended drawings, in which:

- Figure 1 is an example of a conflict management tree that can be updated in accordance with an embodiment of the invention;
- Figures 2a and 2b show a flow chart depicting a method in accordance with an embodiment of the present invention;
- Figure 3 shows a conflict management tree created online from only one security rule just after being introduced by a security rules administrator;
- Figures 4-6 show different stages of an updated conflict management tree when adding a new rule to an existing rule set;
- Figure 7 shows a conflict management tree free of rule anomalies;
- Figure 8 shows a part of another conflict management tree containing rule anomalies; and
- Figure 9 shows the conflict management tree of Figure 8 with one new added rule;
- Figure 10 shows the conflict management tree of Figure 9 illustrating the presence of redundant rules;
- Figures 11-12 show each a part of a conflict management tree of Figure 9 free of rule anomalies.

DETAILED DESCRIPTION OF EMBODIMENTS OF THE INVENTION

Some embodiments of the invention will now be described in more detail with reference to the appended drawings. In the following description, the embodiments of the invention are described in the context of a communication system employing internet protocol (IP). However, the present invention is by no means limited to the use of IP.

The present invention may be implemented in a logical or a physical device inside filtering equipment. The only condition for the equipment is that it uses a set of rules that provides the corresponding actions or decisions to be applied when some conditions are satisfied. Examples of these devices are hardware firewalls, software firewalls (netfilter, ipfilter, etc.), intrusion detection/prevention systems (snort, dragon, etc.) that use a set of rules gathered in a signature database. Moreover, this technique may be generalized to other non security equipment such as quality of service (QoS) management tools, routers (routing table management, border gateway protocol aggregation, etc), optical network units (ONUs), optical line terminators (OLTs), gigabit ethernet passive optical networks (GePONs), messaging servers and client tools such as Microsoft™ Outlook when new rules are added, e.g. forwarding when receiving or sending new emails, etc. Moreover, the present invention is also useful for the new generation networks. In fact, this invention is recommended to be used for conflict configuration in session border controllers (SBCs) and in application layer gateways (ALGs) that have seen a great interest in the current voice over IP (VoIP) networks.

While the related work done in this field focused only on detecting some anomalies in a set of rules, the present invention applies not only to firewall misconfigurations but also to intrusion detection rules such as snort's rules, files (or directory) access control in different Operating Systems (OSs) such as Windows, Linux, Unix, messaging servers and/or clients, industrial mechanisms and automation. In the following detailed description, the present invention is explained in more detail and its different procedures applied to a set of firewall rules since these rules illustrate efficiently the applicability of this invention.

Many current security equipment pieces which are either software or hardware devices, are mainly configured with a set of rules such as those introduced in Table 1. Generally, each rule provides a decision, such as accept, deny, alert, log, etc., according to a set of attribute values. In the case of firewall filtering function, these attributes may be related to the different IP packet header fields. However, this list of attributes is extensible to other features that are either related to application protocols such as the current VoIP protocols including session initiation protocol (SIP) or IP payload contents when dealing with rules in intrusion detection. For simplicity, in the following description some IP header fields such as protocol (P) (e.g. transmission control protocol, user datagram protocol, internet control message protocol, etc.), source IP address (sIP), destination IP address (dIP), source port (sP) and destination port (dP) are only considered. The only condition that the different conditional attributes should fulfill is that their possible values belong to a finite set or a finite interval.

In the following, a grammar is provided that is used to describe the different rules where for each rule a set of conditions should be satisfied to accomplish the corresponding decision(s). Global syntax for a single rule can be defined in the following way:

$R_i$: <Conditions>: <Decisions>
<Conditions> → Condition ^ <Conditions> / Condition
<Decisions> → Decision <OP> <Decisions>/ Decision
<OP> → ∧/∨/...

In the syntax, OP denotes operand, ∧ denotes AND operation and ∨ denotes OR operation. The *Condition* terminal may be any condition where an attribute is tested whether it belongs to a set or not. This set may correspond to a single set, an intersection of many sets, a union of different sets and/or any other operation sets. The *Decision* terminal corresponds to any action that an element managing rules, such as a firewall, may apply such as *deny, accept, log,* etc. This set may contain discrete values, such as "tcp", "udp", "a", "b", "left" "right", "up", "down", "1", "2", " ∗ ", " * ", "Paris" "London", "read", "write", "execute", etc., and/or continuous values such as intervals [-30; 5000], [20.36; 562], etc. However, these sets or intervals should be finite.

Table 1: Filtering rule set example with 5 conditional attributes.

| Priority order | Protocol (P) | Source IP (sIP) | Source Port (sP) | Destination IP (dIP) | Destination Port (dP) | Decision |
|---|---|---|---|---|---|---|
| $R_1$ | any | any | any | x.x.x.[20 - 90] | any | accept |
| $R_2$ | any | any | any | x.x.x.[40 - 120] | any | deny |
| $R_3$ | any | any | any | x.x.x.[1 - 55] | any | accept |
| $R_4$ | any | any | any | x.x.x.[10- 80] | any | deny |
| $R_5$ | any | any | any | x.x.x.[30 - 110] | any | accept |
| $R_6$ | any | any | any | any | any | deny |

From the global syntax presented above, the filtering rule syntax for the example of Table1 would be:

<Conditions> → <P> ∧ <SIP> ∧ <SP>∧ <DIP> ∧ <DP>
<Decision> → accept / deny.

The notation ∧ means logical AND operation. In Table 1, only five conditional attributes, or attributes in short, are present, namely P, sIP, sP, dIP and dP.

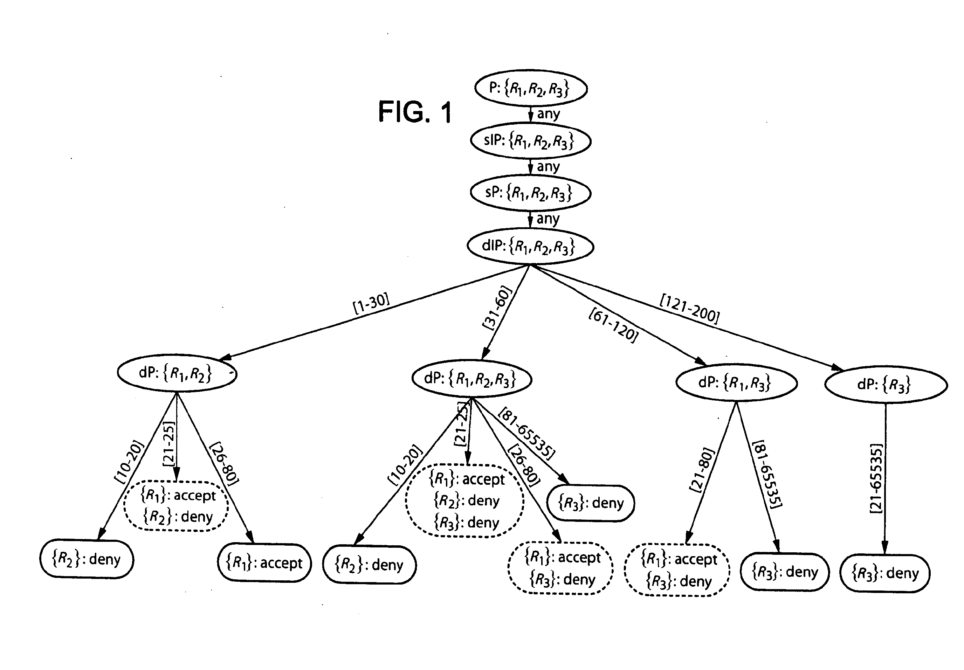

For the purpose of illustrating the online rules updating method, the different rules and the corresponding decisions are presented as a form of a conflict management tree. Figure 1 shows an example of such a tree. As can be seen from this figure, the tree contains three components: nodes, arcs and leaves. First, each node corresponds to a conditional attribute, for instance sIP is one conditional attribute in this example. Second, each arc is labeled with a conditional attribute value or a range of values. Finally, leaves correspond to couples, i.e. rule number and its corresponding decision. The leaves can be considered as special nodes. The different rules may be read by traversing the tree from up to down based on their conditional attribute values and the node values until one leaf is reached. Once a leaf is reached, two cases are possible. There is only one couple present, then the corresponding rule is free of anomalies according to the values of the arcs traversed from the root to the leaves of the conflict tree or there are at least two couples, which is an indication of a rule anomaly or conflict. In this latter case, there is a conflict between the different rules present in the tested leaf.

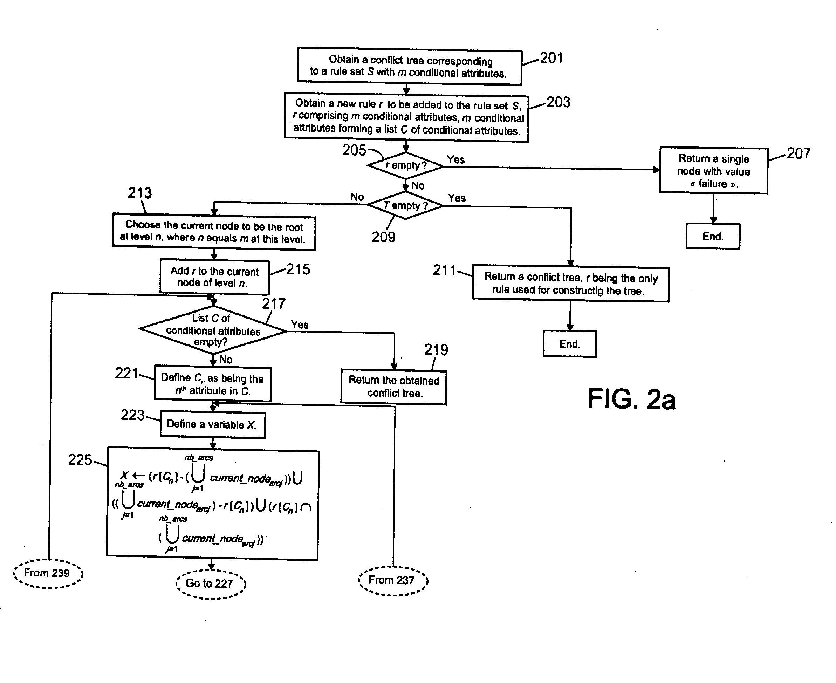

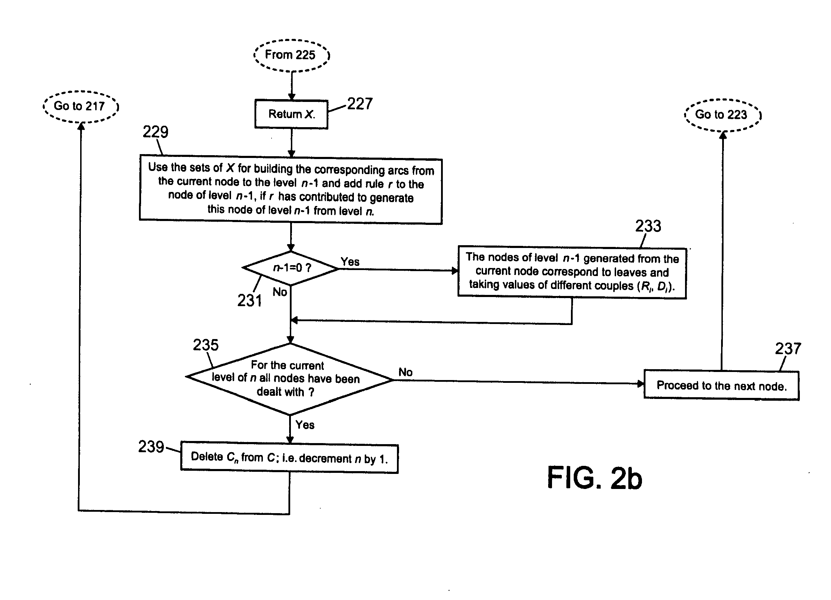

Next the method of updating rules online is described with reference to the flow chart of Figure 2. In step 201 a conflict management tree $T$ is defined corresponding to a rule set $S$. The rule set contains different rules $R$, each having $m$ conditional attributes. The tree $T$ corresponds to a rule set to which an algorithm for constructing a conflict tree is applied. In step 203 a new rule $r$ is provided by an administrator or any other agent such as a user for file access control and the proposed algorithm should then detect all the different anomalies that are present in the new rule set after adding the new rule $r$. This means that a new conflict tree should be constructed containing the preceding set of rules and the new added rule $r$. The new rule $r$ to be added comprises m conditional attributes, where $m$ is a positive integer.

The new rule $r$ is tested in step 205. This means that it is determined whether $r$ actually contains any conditional attributes, i.e. $r$ is not empty. If $r$ does not contain any conditional attributes, then in step 207 a single node is returned taking a value "failure". After this the procedure can be terminated.

On the other hand, if in step 205 it is determined that $r$ indeed contains conditional attributes, then in step 209 it is determined whether $T$ is empty, i.e. there is no existing conflict management tree meaning that the added rule $r$ corresponds to the first rule introduced for example by the administrator. If $T$ is empty, then in step 211 a new conflict management tree is created. The created tree contains as many nodes as there are conditional attributes, each node being identified with a corresponding conditional attribute. Furthermore, the different nodes are connected to each other through arcs which are labeled with corresponding conditional attribute values. At the end of the last conditional attribute value, i.e. $n=1$, there is a leaf, which can be considered to a special node. The leaf is identified with the rule $r$ and its corresponding decision(s). After this step the procedure can be terminated.

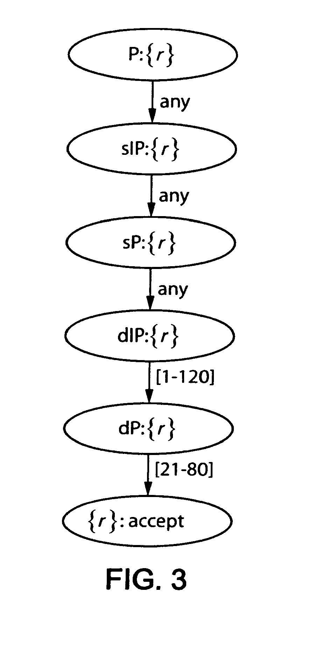

Figure 3 shows an example of a constructed conflict management tree, when the following new rule is added and there is no existing tree: P $\in$ any $\wedge$ sIP $\in$ any $\wedge$ sP $\in$ any $\wedge$ dIP $\in$ x.x.x.[1-120] $\wedge$ dP $\in$ [21-80] $\rightarrow$ accept. As can be seen from the figure, there are five nodes identified by the corresponding conditional attributes and the rule $r$ as there are five conditional attributes in the given rule $r$. Furthermore, the nodes are linked together by arcs, each arc being labeled or identified with the corresponding conditional attribute values. After the last node there is the leaf identified with the decision "accept".

However, if in step 209 it is determined that $T$ is not empty, i.e. there is an existing conflict management tree, then in step 213 the current node is defined to be the root node at level $n$, i.e. the first node of the existing conflict management tree. $n$ is a variable and it denotes the different node levels. At this level $n$ equals $m$. In other words, when considering the given rule set $S$, the node corresponding to the first conditional attribute value can be considered as a root node. Next in step 215 the rule $r$ is added to the current node of level $n$. Each node level corresponds to one conditional attribute. Thus, there are $m$ different levels of nodes and after the last level there are the leaves corresponding to level 0. It is to be noted that each node level may have several parallel children nodes. A child node is defined to be a node that is connected to a father node or current node with an arc.

Then in step 217 the list C of conditional attributes is tested. In other words it is determined whether the list $C$ of conditional attributes is empty. If this is the case, then in step 219 the obtained conflict tree is returned and the procedure terminates. If the list of conditional attributes $C$ is not empty, then the procedure continues in step 221 by defining $C_n$ as being the $n^{\text{th}}$ attribute in $C$. Next in step 223 a variable $X$ is defined.

In step 225 this variable is given the value of:

$$\left( r[C_n] - \left( \bigcup_{j=1}^{nb\_arcs} current\_node_{arcj} \right) \right) \cup \left( \left( \bigcup_{j=1}^{nb\_arcs} current\_node_{arcj} \right) - r[C_n] \right) \cup$$

$$\left( r[C_n] \cap \left( \bigcup_{j=1}^{nb\_arcs} current\_node_{arcj} \right) \right)$$

i.e. the union of the following sets:

$$r[C_n] - \left( \bigcup_{j=1}^{nb\_arcs} current\_node_{arcj} \right), \qquad \left( \bigcup_{j=1}^{nb\_arcs} current\_node_{arcj} \right) - r[C_n] \qquad \text{and}$$

$$r[C_n] \cap \left( \bigcup_{i=1}^{nb\_arcs} current\_node_{arc_j} \right),$$ where $r[C_n]$ corresponds to the values of the conditional attribute of level n of the new rule $r$. In the example given in Figure 3 $r[C_2]= r[dIP]=[1-120]$. $\bigcup_{i=1}^{nb\_arcs} current\_node_{arc_j}$ denotes the union

operation of all the values going from the current processed node of level $n$ to the node of level $n$-1. For instance if we consider Figure 1 and the attribute of level 1 (i.e. attribute dP) and if we consider the second node at that level, i.e. the

one where $R_1$, $R_2$ and $R_3$ are present, then the result is $\left( \bigcup_{j=1}^{nb\_arcs} current\_node_{arc_j} \right) = [10\text{-}20] \cup [21\text{-}25] \cup$

[26-80] $\cup$ [81-65535] = [10-65535]. Then in step 227 the current value of $X$ is returned. The value $X$ is comprised of the sets as defined in step 225.

Then in step 229, the sets as described in step 225 are used to build arcs from the current node to new nodes of level $n$-1 so that these arcs are labeled with these different sets. Thus, there are as many arcs going from the current node to the level $n$-1 nodes as there are number of sets. The nodes of level $n$-1 nodes are further identified with corresponding rules so that each node is identified only by the rules that fulfill the condition set by the corresponding set which labels the arc leading to the corresponding node. It is reminded that the sets correspond to the values of the conditional attributes or subranges of these values.

Next in step 231, the value of $n$-1 is tested by determining whether it is equal to 0. If this is the case, then the "node" of level $n$-1 created in step 229 (corresponding to a new arc) is returned as a leaf. Each returned leaf takes the values of corresponding couples ($R_i$, $D_i$), where $R_i$ corresponds to the remaining rules in the current node and $D_i$ corresponds to the corresponding decision(s), the subindex $i$ is used to identify different rules and decisions. Each leaf is identified by a rule or rules that fulfill the conditions of the set labeling the arc leading to the current leaf. If there is no conflict in the current leaf, then only one couple is returned, whereas if there is a conflict, at least two couples are returned.

If the response to the test done in step 231 is negative then the procedure continues in step 235 by determining whether for the current conditional attribute $C_n$, or equally for the level $n$, all nodes have been dealt with. This is done by checking all the nodes of the previous level, i.e. level $n$+1, and verifying that all the sets have been dealt with, since there is always a node corresponding to a set. The set was defined in step 225, i.e. sets for obtaining the union. This can equally be expressed as checking that all the arcs from the previous level node(s) has/have been dealt with. If all the nodes have not been dealt with, then in step 237 the next node is considered and then the procedure continues in step 223. This loop continues as long as all the nodes have been dealt with.

On the other hand, if in step 235 it is determined that for the current level $n$ all the nodes have been dealt with, then the procedure continues in step 239 by deleting the current $C_n$ from $C$, i.e. $n$ takes the value $n$-1. From step 239 the procedure goes directly back to step 217.

To illustrate the online conflict detection method as described with reference to the flow chart of Figures 2a and 2b, let us consider the conflict management tree shown in Figure 1. The following rule as a new rule is considered to be added:

$R_4$: P $\in$ any $\land$ sIP $\in$ any $\land$ sP $\in$ any $\land$ dIP $\in$ x.x.x.[70-200] $\land$ dP $\in$ [1-139] $\rightarrow$ accept.

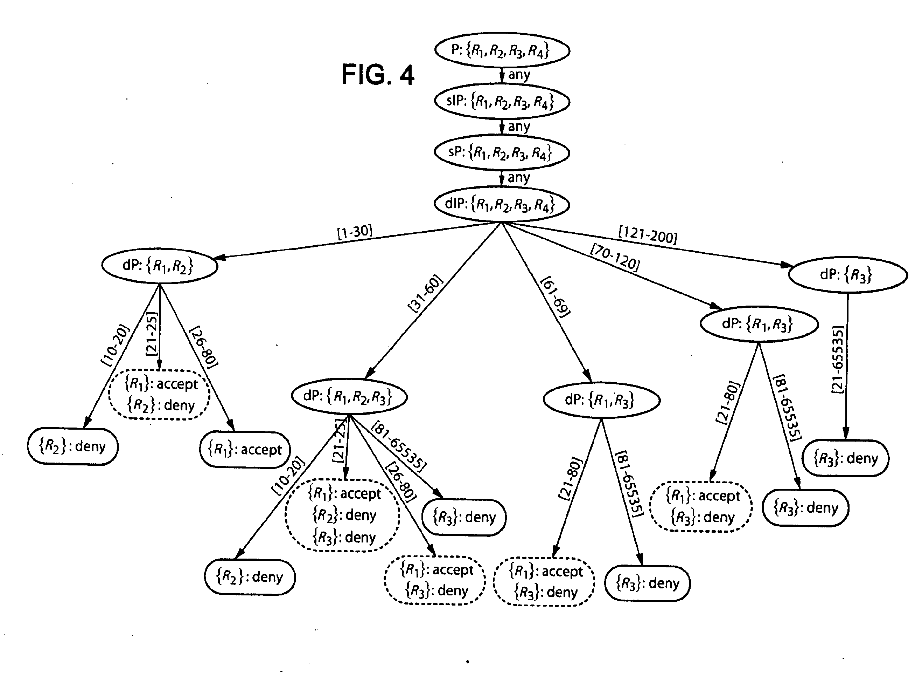

It is to be noted that the first three conditional attributes are not changed compared to the first three conditional attributes of the existing rule set. Therefore, the execution of this algorithm is illustrated starting from the fourth attribute. The first three steps add only this last rule into the four nodes of levels (5, 4, 3 and 2) as can be seen in Figure 4, where the first three nodes are not only labeled by rules $R_1$, $R_2$, $R_3$, but also by $R_4$.

The 2nd ($n$ = 2) conditional attribute is dIP. By performing steps 225 and 227, the arc labeled by a set [61-120] is split into two sets, namely into sets [61-69] and [70-120]. Steps 225 and 227 are called as a partitioning procedure in the following description. Figure 4 shows the state of the conflict management tree after this step has been performed.

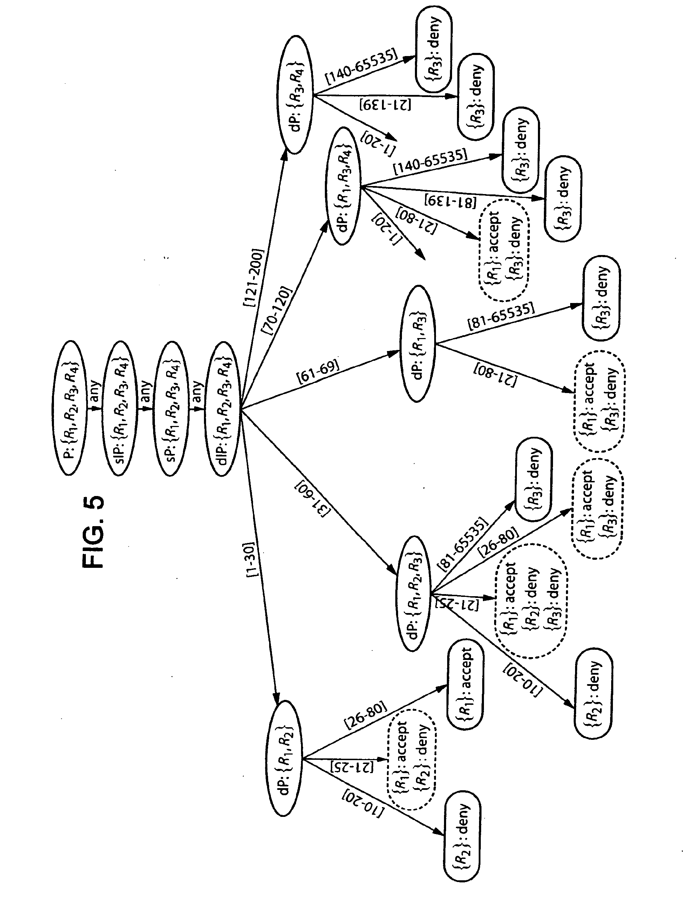

The 1st ($n$ = 1) conditional attribute is dP. By applying the partitioning procedure at this stage splits the arcs going from the last two dIP nodes of the above tree into four and three arcs respectively as shown in Figure 5.

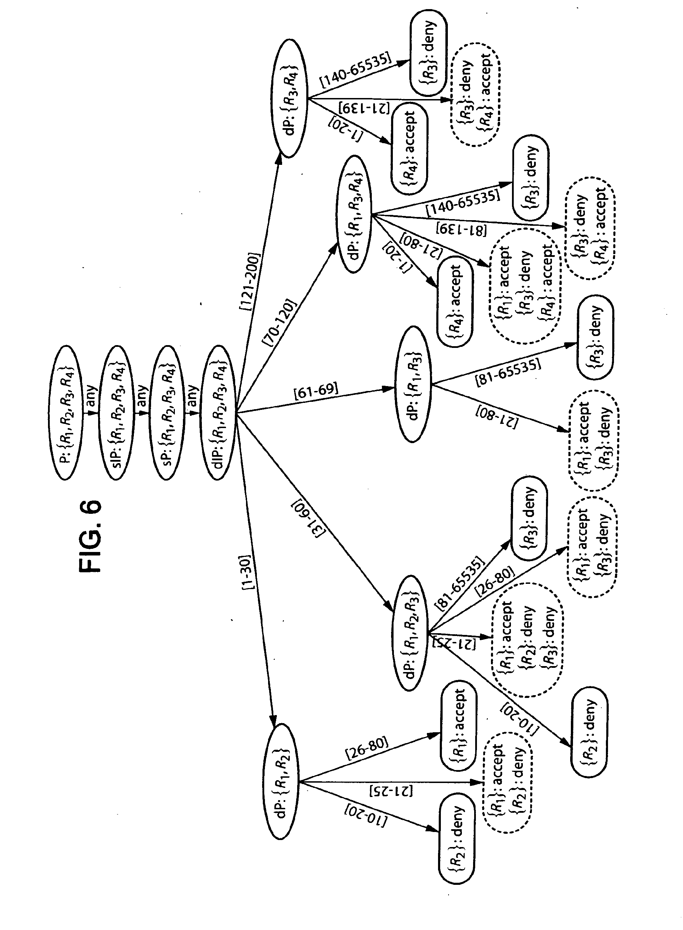

Finally, when $n$-1 = 0 there is no conditional attribute to test. All of the five conditional attributes are tested. Therefore, a leaf is returned for each arc as shown in Figure 6. Each of them contains the remaining couples of the rule numbers and their corresponding decision. If one single leaf contains more than one rule, then this is an indication of an anomaly or conflict. In the figures the leaves with dashed contour lines are an indication of an anomaly.

When trying to find out different anomalies that may be driven from the conflict tree as shown in Figure 6 and generated by the present online conflict detection method, then directly from the tree it can be noticed that there are seven partial shadowing anomalies if we count one partial shadowing for each leaf where there is more than one rule and nine partial shadowing if we consider each rule independently such as the second dashed leaf from the left where there are three rules then two of them with lower priority are shadowed. Partial shadowing can be defined in the following way. Let $S$ be a set of filtering rules. Then $R$ presents a partial shadowing if and only if there exists at least a part of a rule $R_i$ in $S$ that never applies. This is due to the fact that all the packets that may be matched by this rule part are previously matched by at least one part of previous rules having a higher priority. In Figure 6, seven partial shadowing anomalies are:

- 1st partial shadowing $\{R_1, R_2\}$: P $\in$ any $\wedge$ sIP$\in$ any $\wedge$ sP$\in$ any $\wedge$ dIP $\in$ x.x.x.[1-30] $\wedge$ dP $\in$ [21-25] $\rightarrow$ $\{R_1$: accept, $R_2$: deny$\}$. If the priority used is the first match, i.e. $R_1$ has the highest priority then the packets that are matched simultaneously by $R_1$ and $R_2$, as detected by the conflict tree, would take always the decision of $R_1$ (accept) instead of that of $R_2$ (deny) and vice versa. The same partial shadowing anomaly occurs for the following part of the rules $R_1$, $R_2$ and $R_3$:

- 2nd partial shadowing $\{R_1, R_2, R_3\}$: P $\in$ any $\wedge$ sIP $\in$ any $\wedge$ sP $\in$ any $\wedge$ dIP $\in$ x.x.x.[31-60] $\wedge$ dP $\in$ [21-25] $\rightarrow$ $\{R_1$: accept, $R_2$: deny, $R_3$: deny$\}$. In this case, we can consider two partial shadowing anomalies. The first one is that of $R_2$ that is shadowed by $R_1$. The second is that of $R_3$.
- 3rd partial shadowing $\{R_1, R_3\}$: P $\in$ any $\wedge$ sIP $\in$ any $\wedge$ sP $\in$ any $\wedge$ dIP $\in$ x.x.x.[31-60] $\wedge$ dP $\in$ [26-80] $\rightarrow$ $\{R_1$: accept, $R_3$: deny$\}$.
- 4th partial shadowing $\{R_1, R_3\}$: P $\in$ any $\wedge$ sIP $\in$ any $\wedge$ sP $\in$ any $\wedge$ dIP $\in$ x.x.x.[61-69] $\wedge$ dP $\in$ [21-80] $\rightarrow$ $\{R_1$: accept, $R_3$: deny$\}$.
- 5th partial shadowing $\{R_1, R_3, R_4\}$: P $\in$ any $\wedge$ sIP $\in$ any $\wedge$ sP $\in$ any $\wedge$ dIP $\in$ x.x.x.[70-120] $\wedge$ dP $\in$ [21-80] $\rightarrow$ $\{R_1$: accept, $R_3$: deny, $R_4$: accept$\}$.
- 6th partial shadowing $\{R_3, R_4\}$: P $\in$ any $\wedge$ sIP $\in$ any $\wedge$ sP $\in$ any $\wedge$ dIP $\in$ x.x.x.[70-120] $\wedge$ dP $\in$ [81-139] $\rightarrow$ $\{R_3$: accept, $R_4$: accept $\}$.
- 7th partial shadowing $\{R_3, R_4\}$: P $\in$ any $\wedge$ sIP $\in$ any $\wedge$ sP $\in$ any $\wedge$ dIP $\in$ x.x.x.[121-200] $\wedge$ dP $\in$ [21-139] $\rightarrow$ $\{R_3$: deny, $R_4$: accept$\}$.

There are two solutions proposed here to be provided to the administrator. The first consists in informing him about the different anomalies. This is done by drawing the tree as in Figure 6 or giving him the different paths from the root of the conflict tree to the leaves or by only giving him the partial shadowing anomalies as explained above.

The second solution consists in taking an automatic decision and the administrator is provided with the appropriate rules free of anomalies by deleting these anomalies automatically. The second technique is especially useful for novice administrators or users that perhaps do not have good knowledge about access control rules, file access rights or from any other field where this invention can be applied.

In accordance with the second solution the result is automated by providing a set of rules free of anomalies. In one aspect this solution involves considering the priority ordering of the rules. Therefore, if a rule $R_i$ is first in order because of a higher priority than rule $R_j$, then $R_i$ is taken as the rule for the path corresponding to the conflict. Therefore, this solution maintains the same matching order as the matching order of the first rule set provided by the administrator. In addition to this, the different attribute values that never apply are deleted from the first rule set. This solution is considered as an option in addition to the administrator warning.

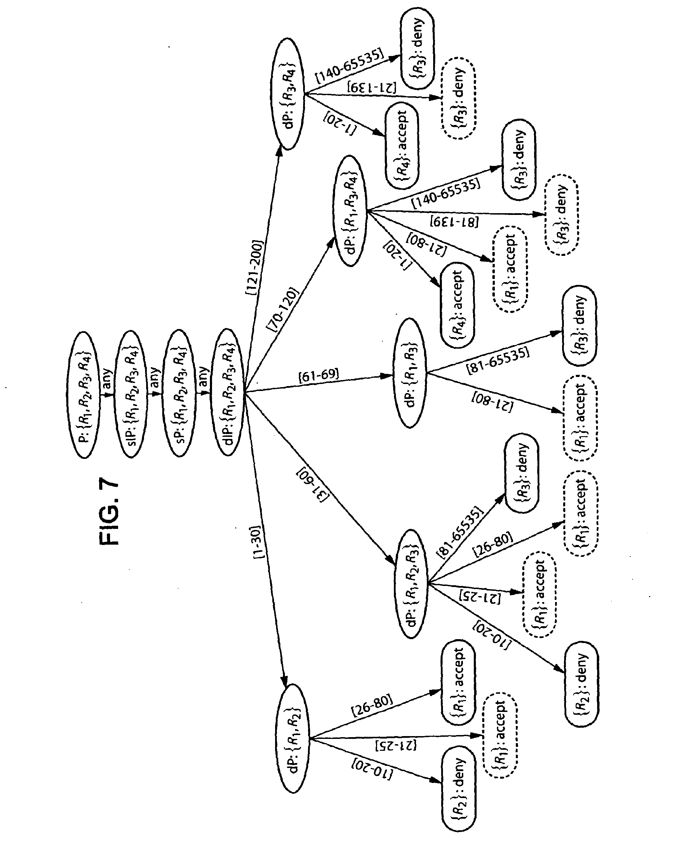

A rule set is free from anomalies if its corresponding conflict tree that is generated does not contain leaves with more than one couple, i.e. a rule and its corresponding decision(s). For instance, the tree shown in Figure 7 is free from all anomalies. It is generated by choosing in each leaf the rule with the highest priority. A direct decision can be taken without considering the administrator decision since the conflict is taken in favor of the rules with higher priority.

Therefore, the administrator (or user or any other agent) is provided automatically with the following set of rules that is free from anomalies:

$R_1$: P $\in$ any $\wedge$ sIP $\in$ any $\wedge$ sP $\in$ any $\wedge$ dIP $\in$ x.x.x.[1-120] $\wedge$ dP $\in$ [21-80] $\rightarrow$ accept;
$R_{2'}$: P $\in$ any $\wedge$ sIP $\in$ any $\wedge$ sP $\in$ any $\wedge$ dIP $\in$ x.x.x.[1-60] $\wedge$ dP $\in$ [10-20] $\rightarrow$ deny;
$R_{31'}$: P $\in$ any $\wedge$ sIP $\in$ any $\wedge$ sP $\in$ any $\wedge$ dIP $\in$ x.x.x.[31-120] $\wedge$ dP $\in$ [81-65535] $\rightarrow$ deny;
$R_{33'}$: P $\in$ any $\wedge$ sIP $\in$ any $\wedge$ sP $\in$ any $\wedge$ dIP $\in$ x.x.x.[121-200] $\wedge$ dP $\in$ [21-65535] $\rightarrow$ deny; and
$R_{4'}$: P $\in$ any $\wedge$ sIP $\in$ any $\wedge$ sP $\in$ any $\wedge$ dIP $\in$ x.x.x.[70-200] $\wedge$ dP $\in$ [1-20] $\rightarrow$ accept.

The rules generated from the conflict management tree are totally disjoint and are free from anomalies. Since they are disjoint then the result of their execution is the same when changing the order of the different rules. In the example given above $R_1$ is left unchanged. In fact, it is generated from the conflict tree in the following way:

$R_{11}$: P ∈ any ∧ sIP ∈ any ∧ sP ∈ any ∧ dIP ∈ x.x.x.[1-30] ∧ dP ∈ [21-25] → accept;
$R_{12}$: P ∈ any ∧ sIP ∈ any ∧ sP ∈ any ∧ dIP ∈ x.x.x.[1-30] ∧ dP ∈ [26-80] → accept;
$R_{13}$: P ∈ any ∧ sIP ∈ any ∧ sP ∈ any ∧ dIP ∈ x.x.x.[31-60] ∧ dP ∈ [21-25] → accept;
$R_{14}$: P ∈ any ∧ sIP ∈ any ∧ sP ∈ any ∧ dIP ∈ x.x.x.[31-60] ∧ dP ∈ [26-80] → accept;
$R_{15}$: P ∈ any ∧ sIP ∈ any ∧ sP ∈ any ∧ dIP ∈ x.x.x.[61-69] ∧ dP ∈ [21-80] → accept; and
$R_{16}$: P ∈ any ∧ sIP ∈ any ∧ sP ∈ any ∧ dIP ∈ x.x.x.[70-120] ∧ dP ∈ [21-80] → accept.

Then this rule set is grouped into the following rule set:

$R_{1(1-2)}$: P ∈ any ∧ sIP ∈ any ∧ sP ∈ any ∧ dIP ∈ x.x.x.[1-30] ∧ dP ∈ [21-25] ∪ [26-80] → accept;
$R_{1(3-4)}$: P ∈ any ∧ sIP ∈ any ∧ sP ∈ any ∧ dIP ∈ x.x.x.[31-60] ∧ dP ∈ [21-25] ∪ [26-80] → accept; and
$R_{1(5-6)}$: P ∈ any ∧ sIP ∈ any ∧ sP ∈ any ∧ dIP ∈ x.x.x.[61-69] ∪ x.x.x. [70-120] ∧ dP ∈ [21-80] → accept.

This in turn is grouped into one rule:

$R_{1(1-6)}$: P ∈ any ∧ sIP ∈ any ∧ sP ∈ any ∧ dIP ∈ x.x.x.[1-30] ∪ x.x.x.[31-60] ∪ x.x.x.[61-69] ∪ x.x.x. [70-120] ∧ dP ∈ [21-25] ∪ [26-80] ∪ [21-80] → accept. This in turn is equivalent to the original rule $R_1$:
$R_{1,1-6}$: P ∈ any ∧ sIP ∈ any ∧ sP ∈ any ∧ dIP ∈ x.x.x.[1-120] ∧ dP ∈ [21-80] → accept.

The other three rules $R_2$, $R_3$ and $R_4$ are obtained from the conflict management tree of Figure 6 in the following way:

$R_{21}$: P ∈ any ∧ sIP ∈ any ∧ sP ∈ any ∧ dIP ∈ x.x.x.[1-30] ∧ dP ∈ [10-20] → deny;
$R_{22}$: P ∈ any ∧ sIP ∈ any ∧ sP ∈ any ∧ dIP ∈ x.x.x.[31-60] ∧ dP ∈ [10-20] → deny;
$R_{31}$: P ∈ any ∧ sIP ∈ any ∧ sP ∈ any ∧ dIP ∈ x.x.x.[31-60] ∧ dP ∈ [81-65535] → deny;
$R_{32}$: P ∈ any ∧ sIP ∈ any ∧ sP ∈ any ∧ dIP ∈ x.x.x.[61-69] ∧ dP ∈ [81-65535] → deny;
$R_{33}$: P ∈ any ∧ sIP ∈ any ∧ sP ∈ any ∧ dIP ∈ x.x.x.[70-120] ∧ dP ∈ [81-139] → deny;
$R_{34}$: P ∈ any ∧ sIP ∈ any ∧ sP ∈ any ∧ dIP ∈ x.x.x.[70-120] ∧ dP ∈ [140-65535] → deny;
$R_{35}$: P ∈ any ∧ sIP ∈ any ∧ sP ∈ any ∧ dIP ∈ x.x.x.[121-200] ∧ dP ∈ [21-139] → deny;
$R_{36}$: P ∈ any ∧ sIP ∈ any ∧ sP ∈ any ∧ dIP ∈ x.x.x.[121-200] ∧ dP ∈ [140-65535] → deny;
$R_{41}$: P ∈ any ∧ sIP ∈ any ∧ sP ∈ any ∧ dIP ∈ x.x.x.[70-120] ∧ dP ∈ [1-20] → accept; and
$R_{42}$: P ∈ any ∧ sIP ∈ any ∧ sP ∈ any ∧ dIP ∈ x.x.x.[121-200] ∧ dP ∈ [1-20] → accept.

The above rule set is equivalent to the following set:

$R_{2(1-2)}$: P ∈ any ∧ sIP ∈ any ∧ sP ∈ any ∧ dIP ∈ x.x.x.[1-30] ∪ x.x.x.[31-60] ∧ dP ∈ [10-20] → deny;
$R_{3(1-2)}$: P ∈ any ∧ sIP ∈ any ∧ sP ∈ any ∧ dIP ∈ x.x.x.[31-60] ∪ x.x.x.[61-69] ∧ dP ∈ [81-65535] → deny;
$R_{3(3-4)}$: P ∈ any ∧ sIP ∈ any ∧ sP ∈ any ∧ dIP ∈ x.x.x.[70-120] ∧ dP ∈ [81-139] ∪ [140-65535] → deny;
$R_{3(5-6)}$: P ∈ any ∧ sIP ∈ any ∧ sP ∈ any ∧ dIP ∈ x.x.x.[121-200] ∧ dP ∈ [21-139] ∪ [140-65535] → deny; and
$R_{4'}$: P ∈ any ∧ sIP ∈ any ∧ sP ∈ any ∧ dIP ∈ x.x.x.[70-120] ∪ [121-200] ∧ dp ∈ [1-20] → accept.

This in turn is equivalent to the following rule set:

$R_{2'}$: P ∈ any ∧ sIP ∈ any ∧ sP ∈ any ∧ dIP ∈ x.x.x.[1-60] ∧ dP ∈ [10-20] → deny;
$R_{31'}$: P ∈ any ∧ sIP ∈ any ∧ sP ∈ any ∧ dIP ∈ x.x.x.[31-69] ∧ dP ∈ [81-65535]→ deny;
$R_{32'}$: P ∈ any ∧ sIP ∈ any ∧ sP ∈ any ∧ dIP ∈ x.x.x.[70-120] ∧ dP ∈ [81-65535] → deny;
$R_{33'}$: P ∈ any ∧ sIP ∈ any ∧ sP ∈ any ∧ dIP ∈ x.x.x.[121-200] ∧ dP ∈ [21-65535] → deny; and
$R_{4'}$: P ∈ any ∧ sIP ∈ any ∧ sP ∈ any ∧ dIP ∈ x.x.x.[70-200] ∧ dP ∈ [1-20] → accept.

This in turn is equivalent to the following rule set that is free from anomalies:

$R_1$: P ∈ any ∧ sIP ∈ any ∧ sP ∈ any ∧ dIP ∈ x.x.x.[1-120] ∧ dP ∈ [21-80] → accept;
$R_{2'}$: P ∈ any ∧ sIP ∈ any ∧ sP ∈ any ∧ dIP ∈ x.x.x.[1-60] ∧ dP ∈ [10-20] → deny;
$R_{31'}$: P ∈ any ∧ sIP ∈ any ∧ sP ∈ any ∧ dIP ∈ x.x.x.[31-120] ∧ dP ∈ [81-65535] → deny;
$R_{33'}$: P ∈ any ∧ sIP ∈ any ∧ sP ∈ any ∧ dIP ∈ x.x.x.[121-200] ∧ dP ∈ [21-65535] → deny; and
$R_{4'}$: P ∈ any ∧ sIP ∈ any ∧ sP ∈ any ∧ dIP ∈ x.x.x.[70-200] ∧ dP ∈ [1-20] → accept.

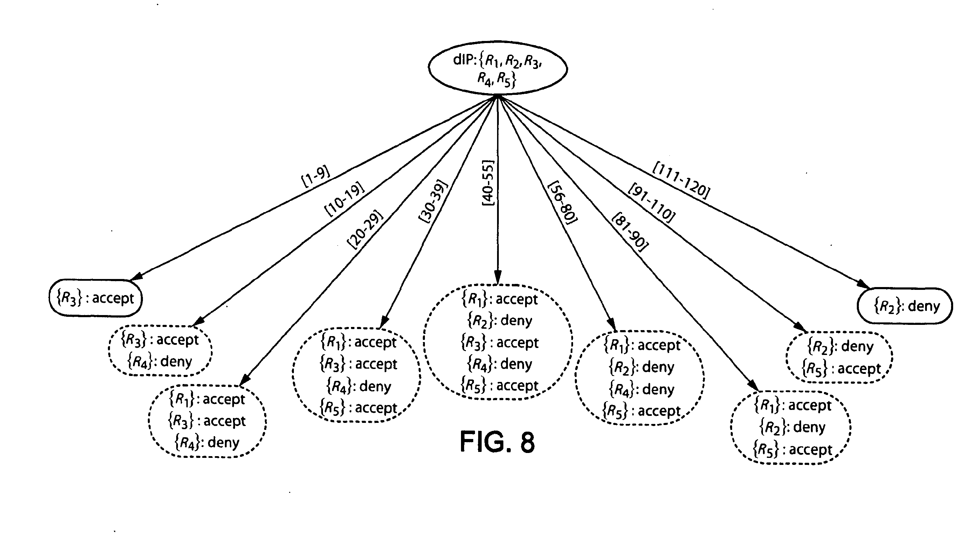

To illustrate other capabilities of the present invention, let us consider the example presented in Table 1 that contains redundancy anomaly as defined in the publication entitled "Detection and Removal of Firewall Misconfiguration". In that document the redundancy was defined in the following way. Let $S$ be a set of filtering rules. Then $S$ contains a complete redundancy if and only if there exists at least one filtering rule $R_i$ in $S$, such that the following conditions hold: (1) $R_i$ is not shadowed by any other rule; (2) when removing $R_i$ from $S$, the filtering result does not change. To check whether a rule $R_i$ is completely redundant, it is sufficient to check each leaf, where this leaf is present, the presence of at least a rule with the same decision. For presentation conveniences, only the node level corresponding to the destination IP (dIP) conditional attribute is described next in more detail. Figure 8 illustrates this situation.

Let us consider a situation, where a new rule, namely rule $R_{34}$ is added to the existing rule set between rules $R_3$ and $R_4$: $R_{34}$: P $\in$ any $\wedge$ sIP $\in$ any $\wedge$ sP $\in$ any $\wedge$ dIP $\in$ x.x.x.[30-130] $\wedge$ dP $\in$ any $\rightarrow$ deny. The administrator adds this rule between $R_3$ and $R_4$ as shown in Table 2 below so that the added rule has the fourth highest priority.

Table 2. New rule set with added rule $R_{34}$.

| Priority order | Protocol (P) | Source IP (sIP) | Source Port (sP) | Destination IP (dIP) | Destination Port (dP) | Decision |
|---|---|---|---|---|---|---|
| $R_1$ | any | Any | any | x.x.x.[20-90] | Any | accept |
| $R_2$ | any | any | any | x.x.x.[40-120] | Any | deny |
| $R_3$ | any | any | any | x.x.x.[1-55] | Any | accept |
| **$R_{34}$** | **any** | **any** | **any** | **x.x.x. [30-130]** | **Any** | **deny** |
| $R_4$ | any | any | any | x.x.x.[10-80] | Any | deny |
| $R_5$ | any | any | any | x.x.x.[30-110] | Any | accept |
| $R_6$ | any | any | any | any | Any | deny |

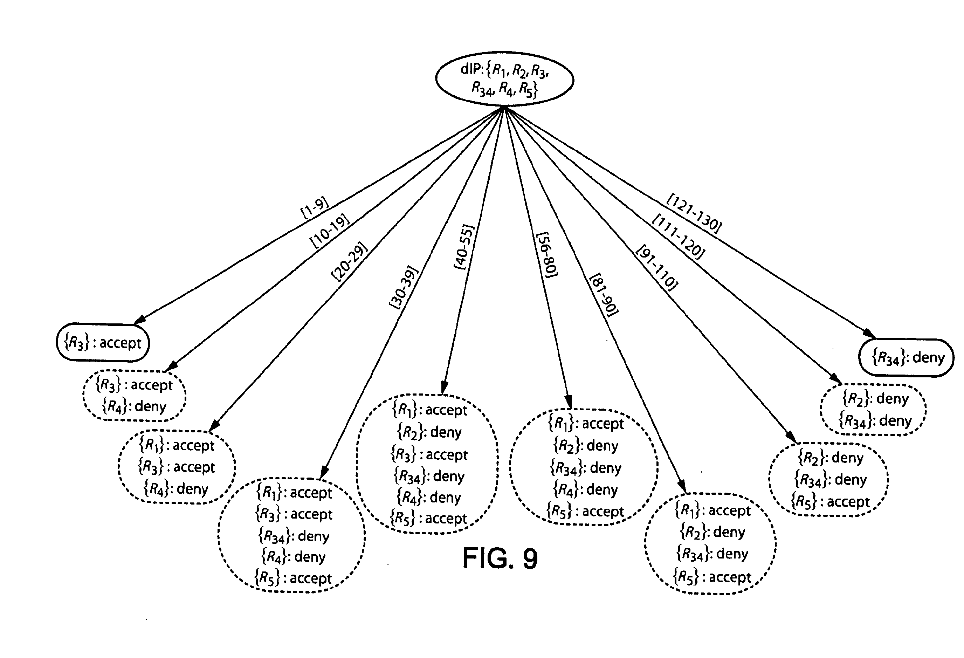

By using the method as described with reference to the flow chart of Figures 2a and 2b and by using the existing tree as shown in Figure 8, a new tree is obtained. Figure 9 shows the level corresponding to the dIP conditional attribute, when the new rule $R_{34}$ has been added to the existing rule set. From the obtained conflict management tree different anomalies can now be detected.

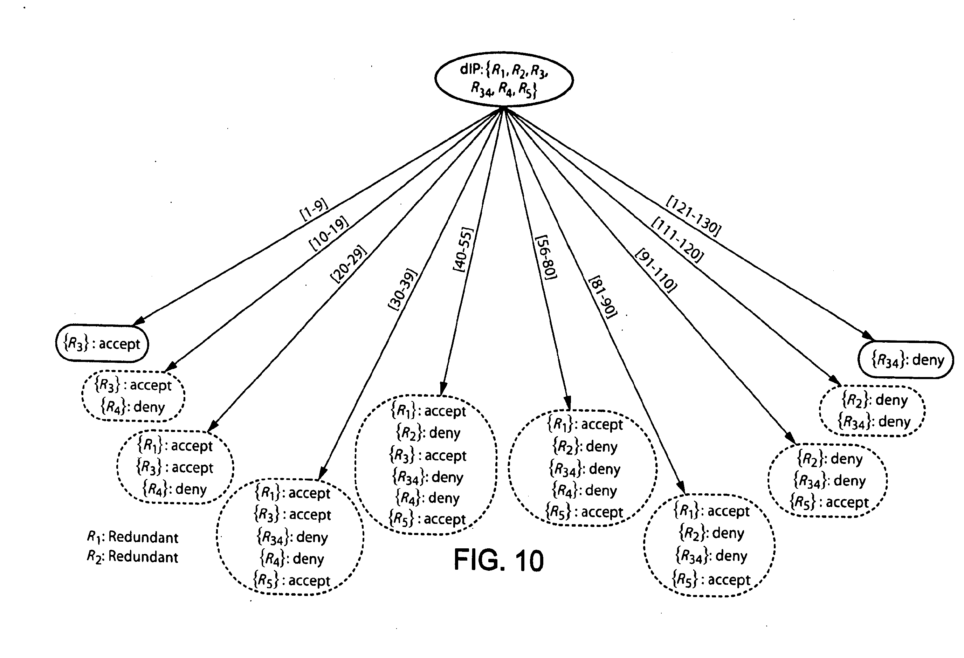

For checking the redundancy as defined in the publication entitled "Detection and Removal of Firewall Misconfiguration", it is sufficient to look at different leaves in the conflict tree and check for each rule the presence of another rule with a lower priority and with the same decision as that of the tested rule. For instance, according to the conflict tree shown in Figure 9, rule $R_1$ is detected as redundant since it appears that in every leaf there is at least another rule with the same decision and a lower priority. In fact, $R_3$ is present with a lower priority and with the same decision in the first three leaves where $R_1$ shows its presence, and $R_5$ with a lower priority and with the same decision is present in the last three leaves where $R_1$ is present. In the third leaf where $R_1$ is present, the two rules $R_3$ and $R_5$ are both present. To detect a general redundancy despite the order of a rule, as for example $R_1$ as presented in Table 2, it is sufficient to check the presence of another rule with the same decision as the tested rule with a lower or a higher priority. With the same manner $R_2$ is detected as redundant. Figure 10 shows the redundant rules $R_1$ and $R_2$.

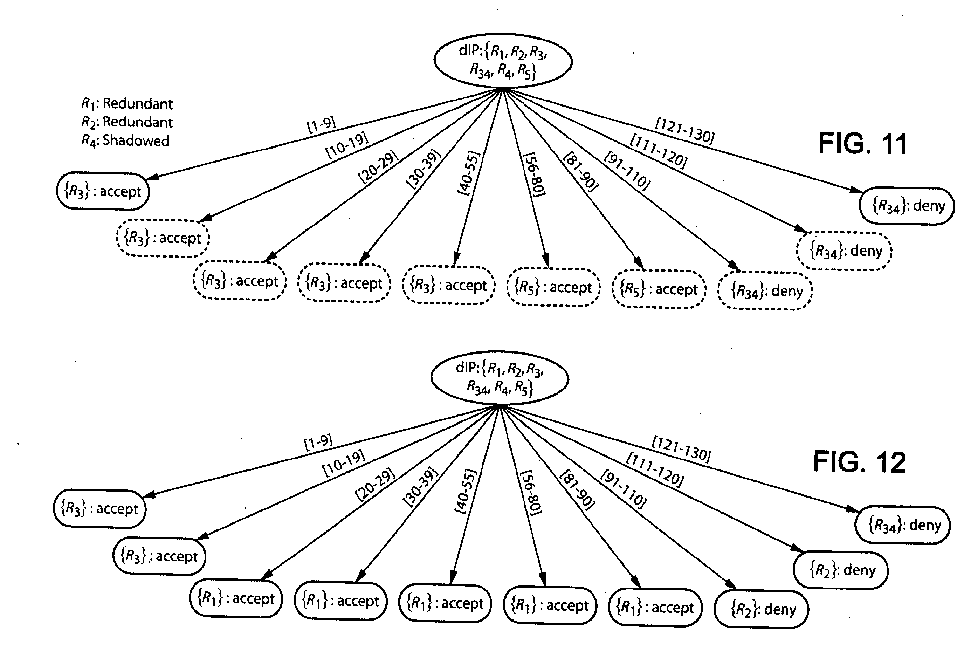

For the detection of shadowing anomaly as defined in the publication entitled "Detection and Removal of Firewall Misconfigurations", it is sufficient to keep only one rule in each leaf after applying the redundancy algorithm. A rule set $S$ contains a complete shadowing anomaly if there exists at least a rule $R_i$ in $S$ that never applies because all the packets that this rule matches are already matched by a prior rule or a combination of rules that have higher priority in order. Then $R_i$ is called a completely shadowed rule. For the complete shadowing detection of a rule $R_i$, by using the method proposed in the present invention, it is sufficient to check each leaf where this rule is present. So if in all of the leaves where it is present, it is partially shadowed by a finite and not empty set of rules that have a higher priority in order, then this rule is completely shadowed. Therefore, if any rule is not present in any leaf of the new generated conflict tree then it is considered as a shadowing anomaly. One option to do this involves deleting the rules with a lower priority in a leaf. Figure 11 presents the result of applying the shadowing algorithm after having applied the redundancy algorithm. From the conflict tree shown in Figure 11, the following set of rules, which is free of errors, is generated:

$R_{3'}$: dIP $\in$ x.x.x.[1-55] $\rightarrow$ accept;
$R_{34'}$: dIP $\in$ x.x.x.[91-130] $\rightarrow$ deny;
$R_{5'}$: dIP $\in$ x.x.x.[56-90] $\rightarrow$ accept.

This set of rules is obtained by applying the redundancy and shadowing anomalies definitions as introduced in the publication entitled "Detection and Removal of Firewall Misconfiguration".

However, the following anomaly definition can also be used: $R$ presents a partial shadowing if and only if there exists at least a part of a rule $R_i$ in $S$ that never applies. If this definition is used on the original conflict tree shown in Figure 9, then the corresponding conflict tree that is free of anomalies is shown in Figure 12. The result is obtained in Figure 12 by simply taking the first rule in each leaf and removing the other rules in the current leaf. This choice will not alter the execution and comparison ordering of the obtained rules by the corresponding equipment when compared to the execution of the first rule set as it is introduced initially.

From the conflict tree shown in Figure 12, the following rule set, which is free of errors, is generated. Only the dIP conditional attribute is considered for the matter of illustration:

$R_{1'}:$ dIP $\in$ x.x.x.[20-90] $\rightarrow$ accept;

$R_{2'}:$ dIP $\in$ x.x.x.[91-120] $\rightarrow$ deny;

$R_{3'}:$ dIP $\in$ x.x.x.[1-19] $\rightarrow$ accept;

$R_{34'}:$ dIP $\in$ x.x.x.[121-131] $\rightarrow$ deny.

It is to be noted that the rule set generated from the conflict tree in Figure 11 is different from that generated from the conflict tree of Figure 12. This is due to the definition of redundancy introduced in the publication entitled "Detection and Removal of Firewall Misconfiguration". In fact, for the first rule set the execution and comparison orders according to the original rule set are not maintained while this is not the case when using the option proposed in the present invention. The solution for obtaining the result as shown in Figure 12 may be considered better in certain instances, especially because it is quite simple to implement.

The administrator may choose appropriate measures to be taken from the conflict tree that is automatically generated from the algorithm of the flow chart of Figures 2a and 2b. By using the different rules in the leaves of the conflict tree, misconfigurations can be found out such as complete shadowing and complete redundancy. One can define these misconfigurations differently than as was defined above. Despite the definition of a rule misconfiguration, its detection depends directly on the different rules that are present in the different conflict tree leaves. A rule may be completely shadowed and completely redundant at the same time. Many other anomalies may be defined such as generalization, correlation, etc. All of these anomalies may be detected from the conflict tree and particularly from the leaves.

The rules generated from the conflict tree as shown in Figure 12 are totally disjoint and are free of anomalies. Since they are disjoint then the result of their execution is the same when changing the order of the different rules.

The invention equally relates to a computer program product that is able to implement any of the method steps of the embodiments of the invention when loaded and run on computer means of an electronic device.

The invention equally relates to an electronic device that is arranged to implement the method steps described above. The computer program can be arranged to be run by the electronic device.

Thus, the present invention provides a robust and concise method which is able to detect all possible anomalies in an optimum way, i.e. space and time consumptions are minimized. Furthermore the present invention enables updating the rule set and thereby the related conflict management tree online. Moreover, the embodiments of the present invention let the network administrator choose the appropriate combination of rules that is free of anomalies. The decision may be automatic or manual according to the preferences of the administrator.

While the invention has been illustrated and described in detail in the drawings and foregoing description, such illustration and description are to be considered illustrative or exemplary and not restrictive; the invention is not restricted to the disclosed embodiments.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that different features are recited in mutually different dependent claims does not indicate that a combination of these features cannot be advantageously used. Any reference signs in the claims should not be construed as limiting the scope of the invention.

**Claims**

1. An online method of managing security rule conflicts in an electronic device arranged to store a set $S$ of security rules $R$, each rule comprising a list of conditional attributes $C$ and at least one corresponding decision, the list of conditional attributes further comprising $m$ individual conditional attributes $C_n$ identified by corresponding intervals of values for setting a condition, where $n$ is a variable identifying different conditional attributes in a rule, the method comprises the following steps performed by the electronic device:

   - upon determining that $m \geq 1$, obtaining (201) a conflict management tree comprising $m$ levels of nodes, the nodes of different levels being connected to each other by arcs labeled by intervals or subintervals of the conditional attribute values and the nodes being identified by a rule or rules fulfilling the condition set by the interval or subinterval labeling the arc leading to the corresponding node, the conflict management tree having leaves at the end of the arcs originating from the last level of nodes, each leaf being identified by a rule or rules that fulfill the condition set by the interval or subinterval labeling the arc leading to the current leaf and further being identified by the at least one corresponding decision;
   - receiving (203) a new rule $r$ to be added to the set $S$ of security rules; and **characterized by**
   - updating (229) online the conflict management tree based on the received new rule;

   wherein the updating comprises:

   a) defining (223) a variable $X$;

   b) $X$ taking the value of

$$\left( r[C_n] - \left( \bigcup_{j=1}^{number\ of\ arcs} current\_node_{arcj} \right) \right) \cup$$

$$\left( \left( \bigcup_{j=1}^{number\ of\ arcs} current\_node_{arcj} \right) - r[C_n] \right) \cup \left( r[C_n] \cap \left( \bigcup_{j=1}^{number\ of\ arcs} current\_node_{arcj} \right) \right),\quad \text{where}$$

   $\cup$ denotes mathematical operation union, $\cap$ denotes mathematical operation intersection, $current\_node_{arcj}$ denotes the intervals or subintervals of an arc $j$ from the current node to the level n-1 node and where

$$\left( r[C_n] - \left( \bigcup_{j=1}^{number\ of\ arcs} current\_node_{arcj} \right) \right),\quad \left( \left( \bigcup_{j=1}^{number\ of\ arcs} current\_node_{arcj} \right) - r[C_n] \right) \text{ and}$$

$$\left( r[C_n] \cap \left( \bigcup_{j=1}^{number\ of\ arcs} current\_node_{arcj} \right) \right)$$

   are sets of the union operation corresponding to the intervals or subintervals of the conditional attributes $C_n$;
   c) using (229) the sets of X for forming arcs to level $n$-1 nodes so that each set is used to label only one arc, wherein the level $n$-1 nodes are identified by the corresponding rules so that each node is identified only by the rules that fulfill the condition set by the corresponding set labeling the arc leading to the corresponding node.

2. The method according to claim 1, wherein the updating further comprises:

   d) determining (231) whether $n$-1 equals to 0; and
   e) in case $n$-1 equals to 0, then adding (233) leaves to the level $n$-1 of the current node, the leaves being identified by a rule or rules that fulfill(s) the conditions of the set labeling the arc leading to the corresponding leaf.

3. The method according to claim 2, wherein the updating further comprises:

   f) in case $n$-1 does not equal to 0 or after having performed step e), then determining (235) whether all nodes of the current level $n$ have been dealt with, and if this is not the case then repeating steps a) to d) until all the nodes of the current level $n$ have been dealt with; and
   g) decrementing (239) $n$ by 1 and then repeating steps a) to f).

4. The method according to claim 2, wherein the determination in step d) comprises checking all the nodes of the level $n$+1, and verifying that all the arcs originating from the level $n$+1 have been dealt with.

5. The method according to any of the preceding claims, wherein the method further comprises checking whether there are at least two rules in a same leaf, and this being the case, determining that there is at least one misconfiguration anomaly in the set $S$ of security rules.

6. The method according to claim 5, wherein a console is used to warn an administrator about the different anomalies once a new rule is introduced.

7. The method according to claim 5, wherein the method further comprises warning an administrator managing the electronic device about an anomaly and/or providing a set of rules free of conflicts.

8. The method according to claim 7, wherein providing a set of rules free of conflicts comprises considering priority order of the rules and choosing the rule in a leaf with the highest priority, wherein the corresponding attribute values are obtained by starting from the root and taking the attribute values leading to the current leaf.

9. The method according to claim 7, wherein providing a set of rules free of conflicts comprises determining in each leaf whether there are at least a first rule and a second rule with the same decision and if this is the case then choosing from these rules the rule with the highest priority and if the second rule is preceded in all leaves where it is present by another rule with the same decision then it is detected as completely redundant, and wherein the corresponding attribute values are obtained by starting from the root and taking the attribute values leading to the current leaf.

10. The method according to any of the preceding claims, wherein in case $m$ equals to 0, then updating the conflict management tree comprises building a conflict management tree comprising $l$ levels of nodes, $l$ denoting the number of conditional attributes of the rule $r$, the nodes of different levels being connected to each other by arcs labeled by intervals or subintervals of the conditional attribute values and the nodes being **characterized by** a rule or rules fulfilling the condition set by the interval or subinterval labeling the arc leading to the corresponding node, the conflict management tree having leaves at the end of the arcs originating from the last level of nodes, each leaf being identified by a rule or rules that fulfill the condition set by the interval or subinterval labeling the arc leading to the current leaf and further being identified by (a) corresponding decision(s)

11. A computer program product comprising instructions for implementing all the steps of a method according to any one of claims 1-10 when loaded and run on the computer means of an electronic device.

12. An electronic device capable of managing security rule conflicts online in a communication system, wherein the electronic device is arranged to store a set $S$ of security rules $R_i$, and each rule comprising a list of conditional attributes $C$ and at least one corresponding decision, the list of conditional attributes further comprising $m$ individual conditional attributes $C_n$ identified by corresponding intervals of values for setting a condition, where $n$ is a variable identifying different conditional attributes in a rule, the electronic device comprises:

   - means for obtaining in case $m \geq 1$ a conflict management tree comprising $m$ levels of nodes, the nodes of different levels being connected to each other by arcs labeled by intervals or subintervals of the conditional attributes and the nodes being identified by a rule or rules fulfilling the condition set by the interval or subinterval labeling the arc leading to the corresponding node, the conflict management tree having leaves at the end of the arcs originating from the last level of nodes, each leaf being identified by a rule or rules that fulfill the condition set by the interval or subinterval labeling the arc leading to the current leaf and further being identified by (a) corresponding decision(s);
   - a receiving unit for receiving a new rule to be added to the set S of security rules; and **characterized by**
   - an updating unit for updating online the conflict management tree based on the received new rule adapted such that

the updating comprises:

a) defining (223) a variable $X$;

b) X taking the value of

$$\left( r[C_n] - \left( \bigcup_{j=1}^{number\ of\ arcs} current\_node_{arcj} \right) \right) \cup$$

$$\left( \left( \bigcup_{j=1}^{number\ of\ arcs} current\_node_{arcj} \right) - r[C_n] \right) \cup \left( r[C_n] \cap \left( \bigcup_{j=1}^{number\ of\ arcs} current\_node_{arcj} \right) \right),$$

where $\cup$ denotes mathematical operation union, $\cap$ denotes mathematical operation intersection, $current\_node_{arcj}$ denotes the intervals or subintervals of an arc j from the current node to the level n-1 node and where

$$\left( r[C_n] - \left( \bigcup_{j=1}^{number\ of\ arcs} current\_node_{arcj} \right) \right),$$

$$\left( \left( \bigcup_{j=1}^{number\ of\ arcs} current\_node_{arcj} \right) - r[C_n] \right) \text{ and } \left( r[C_n] \cap \bigcup_{j=1}^{number\ of\ arcs} current\_node_{arcj} \right)$$

are sets of the union operation corresponding to the intervals or subintervals of the conditional attributes $C_n$;
c) using (229) the sets of X for forming arcs to level $n$-1 nodes so that each set is used to label only one arc, wherein the level $n$-1 nodes are identified by the corresponding rules so that each node is identified only by the rules that fulfill the condition set by the corresponding set labeling the arc leading to the corresponding node.

**Patentansprüche**

1.  Ein Online-Verfahren zur Verwaltung von Konflikten von Sicherheitsregeln in einem elektronischen Gerät, das angeordnet ist, um einen Satz $S$ von Sicherheitsregeln $R$ zu speichern, wobei jede Regel eine Liste von konditionalen Attributen $C$ und mindestens eine entsprechende Entscheidung enthält, und wobei die Liste der konditionalen Attribute weiter $m$ individuelle konditionale Attribute $C_n$ enthält, die durch die entsprechenden Wertintervalle zur Einstellung einer Bedingung identifiziert werden, wobei $n$ eine Variable darstellt, die verschiedene konditionale Attribute in einer Regel identifiziert, wobei das Verfahren die folgenden Schritte umfasst, die von dem elektronischen Gerät durchgeführt werden:

    - bei der Bestimmung, dass $m \geq 1$ ist, wird ein Konflikt-Verwaltungs-Baum erhalten (201), der m Ebenen von Knoten enthält, wobei die Knoten von verschiedenen Ebenen miteinander über Bögen verbunden sind, die **gekennzeichnet sind durch** Intervalle oder Subintervalle der konditionalen Attributwerte und die Knoten mittels einer Regel oder Regeln identifiziert werden, die die Bedingungen erfüllen, die **durch** das Intervall oder Subintervall bestimmt werden, das den Bogen kennzeichnet, der zum entsprechenden Knoten führt, wobei der Konflikt-Verwaltungs-Baum Blätter am Ende der Bögen aufweist, die von der untersten Ebene der Knoten ihren Ausgang nehmen, wobei jedes Blatt über eine Regel oder Regeln identifiziert wird, die die Bedingung erfüllen, die vom Intervall oder Subintervall festgelegt ist, das den Bogen kennzeichnet, der zum gegenwärtigen Blatt führt und welches weiter über mindestens eine entsprechende Entscheidung identifiziert wird.
    - Empfangen (203) einer neuen Regel $r$, um die der Satz $S$ von Sicherheitsregeln ergänzt wird; und
    - Aktualisierung (229) des Online Konflikt-Verwaltungs-Baums auf der Basis der empfangenen neuen Regel;

    wobei die Aktualisierung umfasst:

a) Definition (223) einer Variablen $X$;

b) $X$ nimmt den Wert von

$$\left(r[C_n]-\left(\bigcup_{j=1}^{number\ of\ arcs}current\_node_{arcj}\right)\right)\cup\left(\left(\bigcup_{j=1}^{number\ of\ arcs}current\_node_{arcj}\right)-r[C_n]\right)\cup$$

wobei

$$\left(r[C_n]\cap\left(\bigcup_{j=1}^{number\ of\ arcs}current\_node_{arcj}\right)\right)\text{ an,}$$

$\cup$ die mathematische Operation der Vereinigung und $\cap$ die mathematische Operation der Überschneidung bedeutet, $current\_node_{arcj}$ die Intervalle oder Subintervalle eines Bogens $j$ vom gegenwärtigen Knoten zum Knoten der Ebene $n$-1 beschreibt und wobei

$$\left(r[C_n]-\left(\bigcup_{j=1}^{number\ of\ arcs}current\_node_{arcj}\right)\right),\left(\left(\bigcup_{j=1}^{number\ of\ arcs}current\_node_{arcj}\right)-r[C_n]\right)\text{ und}$$

$$\left(r[C_n]\cap\left(\bigcup_{j=1}^{number\ of\ arcs}current\_node_{arcj}\right)\right)$$

Sätze der Vereinigungsoperation entsprechend der Intervalle oder Subintervalle der konditionalen Attribute $C_n$ sind;

c) Verwendung (229) der Sätze von X zur Ausbildung von Bögen zu Knoten der Ebene $n$-1, sodass jeder verwendete Satz nur einen Bogen kennzeichnet, wobei die Knoten der Ebene $n$-1 über die entsprechenden Regeln identifiziert werden, sodass jeder Knoten nur **durch** die Regeln identifiziert wird, die die Bedingung erfüllen, die **durch** den entsprechenden Satz festgelegt ist, der den zum entsprechenden Knoten führenden Bogen kennzeichnet.

2.  Verfahren nach Anspruch 1, wobei die Aktualisierung weiter enthält:

    d) Bestimmung (231), ob $n$-1 gleich 0 ist; und
    e) für den Fall, dass $n$-1 gleich 0 ist, Hinzufügen von Blättern zur Ebene $n$-1 des gegenwärtigen Knotens, wobei die Blätter über eine Regel oder Regeln identifiziert werden, die die Bedingungen des Satzes erfüllen, die den Bogen kennzeichnen, der zum entsprechenden Blatt führt.

3.  Verfahren nach Anspruch 2, wobei die Aktualisierung weiter enthält:

    f) für den Fall, dass $n$-1 nicht gleich 0 ist oder nach Durchführung von Schritt e), dann Bestimmung, ob alle Knoten der gegenwärtigen Ebene $n$ behandelt wurden und, wenn dies nicht der Fall ist, dann Wiederholung der Schritte a) bis d), bis alle Knoten der gegenwärtigen Ebene $n$ behandelt wurden; und
    g) Absenken (239) von $n$ um 1 und anschließende Wiederholung der Schritte a) bis f).

4.  Verfahren nach Anspruch 2, wobei die Bestimmung in Schritt d) die Überprüfung aller Knoten der Ebene $n$+1 und Verifizierung, dass alle Bögen mit Ursprung von Ebene $n$+1 behandelt wurden, umfasst.

5.  Verfahren nach einem der vorherigen Ansprüche, wobei das Verfahren weiter die Überprüfung enthält, ob mindestens zwei Regeln in einem Blatt sind, und wenn dies der Fall ist, Bestimmung, dass mindestens eine Misskonfigurations-Anomalie im Satz $S$ der Sicherheitsregeln vorliegt.

6.  Verfahren nach Anspruch 5, wobei eine Konsole benutzt wird, um einen Administrator vor verschiedenen Anomalien nach Einführen einer neuen Regel zu warnen.

7. Verfahren nach Anspruch 5, wobei das Verfahren weiter eine Warnung an den Administrator umfasst, der das elektronische Gerät verwaltet, über eine Anomalie und/oder Bereitstellung eines Satzes von Regeln, die frei von Konflikten sind.

8. Verfahren nach Anspruch 7, wobei die Bereitstellung eines Satzes von Regeln frei von Konflikten die Berücksichtigung der Prioritätsreihenfolge der Regeln und Auswahl der Regel in einem Blatt mit der höchsten Priorität umfasst, wobei die entsprechenden Attributswerte erhalten werden, ausgehend von der Wurzel, und Übernahme der Attributwerte, die zum gegenwärtigen Blatt führen.

9. Verfahren nach Anspruch 7, wobei die Bereitstellung eines Satzes von Regeln frei von Konflikten die Bestimmung in jedem Blatt umfasst, ob mindestens eine erste Regel und eine zweite Regel mit derselben Entscheidung vorliegen und, wenn dies der Fall ist, dann Auswahl der Regel mit höchster Priorität aus diesen Regeln und, wenn die zweite Regel in allen Blätter, wo sie vorliegt, eine(r) andere(n) Regel mit derselben Entscheidung vorangeht *l* überlagert, dann wird sie als komplett redundant erkannt, und wobei die entsprechenden Attributwerte ausgehend von der Wurzel und Übernahme der Attributwerte, die zum gegenwärtigen Blatt führen, erhalten werden.

10. Verfahren nach einem der vorstehenden Ansprüche, wobei im Fall $m$ gleich 0 die anschließende Aktualisierung des Konflikt-Verwaltungs-Baums den Bau eines Konflikt-Verwaltungs-Baums mit *l* Knotenebenen umfasst, wobei *l* die Anzahl der konditionalen Attribute der Regel *r* bezeichnet, wobei die Knoten verschiedener Ebenen miteinander über Bögen verbunden sind, die über Intervalle oder Subintervalle der konditionalen Attributwerte **gekennzeichnet** sind, und wobei die Knoten sich durch eine Regel oder Regeln auszeichnen, die die Bedingung erfüllen, die durch das Intervall oder Subintervall festgelegt ist, das den Bogen kennzeichnet, der zum entsprechenden Knoten führt, wobei der Konflikt-Verwaltungs-Baum Blätter am Ende der Bögen hat, die ihren Ursprung in der untersten Knotenebene haben, wobei jedes Blatt über eine Regel oder Regeln identifiziert wird, die die Bedingung erfüllen, die vom Intervall oder Subintervall festgelegt ist, das den Bogen kennzeichnet, der zum gegenwärtigen Blatt führt und weiter über die entsprechend(en) Entscheidung(en) identifiziert wird.

11. Ein Computerprogramm-Produkt, das Instruktionen zur Anwendung aller Schritte eines Verfahrens nach einem der Ansprüche 1 bis 10 enthält, wenn dieses geladen und auf dem Computer-Mittel eines elektronischen Geräts ausgeführt wird.

12. Ein elektronisches Gerät, das in der Lage ist, Konflikte von Sicherheitsregeln online in einem Kommunikationssystem zu verwalten, wobei das elektronische Gerät ausgelegt ist, einen Satz $S$ von Sicherheitsregeln $R_i$ zu speichern, und wobei jede Regel eine Liste von konditionalen Attributen $C$ und mindestens eine entsprechende Entscheidung enthält, wobei die Liste der konditionalen Attribute weiter $m$ individuelle konditionale Attribute $C_n$ umfasst, die identifiziert werden über entsprechende Wertintervalle zum Festlegen einer Bedingung, wobei $n$ eine Variable ist, die verschiedene konditionale Attribute innerhalb einer Regel identifiziert, wobei das elektronische Gerät enthält:

- Mittel zum Erhalt, für den Fall, dass $m \geq 1$ ist, eines Konflikt-Verwaltungs-Baums, der $m$ Knotenebenen enthält, wobei die Knoten verschiedener Ebenen miteinander über Bögen verbunden sind, die **gekennzeichnet sind durch** Intervalle oder Subintervalle von konditionalen Attributen und wobei die Knoten über eine Regel oder Regeln identifiziert werden, die die Bedingung erfüllen, die **durch** das Intervall oder Subintervall festgelegt ist, das den zum entsprechenden Knoten führenden Bogen kennzeichnet, wobei der Konflikt-Verwaltungs-Baum Blätter am Ende der Bögen hat, die ihren Ursprung in der untersten Knotenebene haben, wobei jedes Blatt über eine Regel oder Regeln identifiziert wird, die die Bedingung erfüllen, die **durch** das Intervall oder Subintervall festgelegt ist, das den zum gegenwärtigen Blatt führenden Bogen kennzeichnet und weiter über (eine) entsprechende Entscheidung(en) identifiziert wird.
- eine Empfangseinheit zum Empfangen einer neuen Regel, die dem Satz S der Sicherheitsregeln hinzugefügt wird; und
- eine Aktualisierungseinheit für eine online Aktualisierung des Konflikt-Verwaltungs-Baums auf Basis der erhaltenen neuen Regel, wobei die Aktualisierung umfasst:

a) Definition (223) einer Variablen $X$;

b) $X$ nimmt den Wert von $\left( r[C_n] - \left( \bigcup\limits_{j=1}^{number\ of\ arcs} current\_node_{arcj} \right) \right) \cup$

$\left( \left( \bigcup\limits_{j=1}^{number\ of\ arcs} current\_node_{arcj} \right) - r[C_n] \right) \cup \left( r[C_n] \cap \left( \bigcup\limits_{j=1}^{number\ of\ arcs} current\_node_{arcj} \right) \right)$ an,

wobei $\cup$ die mathematische Operation der Vereinigung und $\cap$ die mathematische Operation der Überschneidung bedeutet, $current\_node_{arcj}$ die Intervalle oder Subintervalle eines Bogens $j$ vom gegenwärtigen Knoten zum Knoten der Ebene $n$-1 beschreibt, und wobei

$\left( r[C_n] - \left( \bigcup\limits_{j=1}^{number\ of\ arcs} current\_node_{arcj} \right) \right), \left( \left( \bigcup\limits_{j=1}^{number\ of\ arcs} current\_node_{arcj} \right) - r[C_n] \right)$ und

$\left( r[C_n] \cap \left( \bigcup\limits_{j=1}^{number\ of\ arcs} current\_node_{arcj} \right) \right)$

Sätze der Vereinigungsoperation entsprechend der Intervalle oder Subintervalle der konditionalen Attribute $C_n$ sind;

c) Verwendung der Sätze von $X$ zur Bildung von Bögen zu Knoten der Ebene $n$-1, so dass jeder Satz eingesetzt wird, um nur einen Bogen zu kennzeichnen, wobei die Knoten der Ebene $n$-1 identifiziert werden über die entsprechenden Regeln, so dass jeder Knoten über die Regeln identifiziert wird, die die Bedingung erfüllen, die **durch** den entsprechenden Satz festgelegt ist, der den zum entsprechenden Knoten führenden Bogen kennzeichnet.

## Revendications

1.  Procédé en ligne de gestion des conflits de règles de sécurité dans un dispositif électronique agencé pour stocker un ensemble S de règles de sécurité R, chaque règle comprenant une liste d'attributs conditionnels C et au moins une décision correspondante, la liste d'attributs conditionnels comprenant en outre m attributs conditionnels individuels $C_n$ identifiés par des intervalles correspondants de valeurs pour fixer une condition, où n est une variable identifiant différents attributs conditionnels dans une règle, le procédé comprenant les étapes suivantes effectuées par le dispositif électronique :

    - à la détermination que m $\geq$ 1, l'obtention (201) d'une arborescence de gestion de conflits comprenant m niveaux de noeuds, les noeuds de différents niveaux étant reliés les uns aux autres par des arcs libellés par des intervalles ou des sous-intervalles de valeurs d'attributs conditionnels et les noeuds étant identifiés par une règle ou des règles remplissant la condition fixée par l'intervalle ou le sous-intervalle libellant l'arc conduisant au noeud correspondant, l'arborescence de gestion de conflits ayant des feuilles à l'extrémité des arcs provenant du dernier niveau de noeuds, chaque feuille étant identifiée par une règle ou des règles remplissant la condition fixée par l'intervalle ou le sous-intervalle libellant l'arc conduisant à la feuille actuelle et étant en outre identifiée par l'au moins une décision correspondante ;
    - la réception (203) d'une nouvelle règle r à ajouter à l'ensemble S de règles de sécurité ;
    et **caractérisé par**
    - la mise à jour (229) en ligne de l'arborescence de gestion de conflits sur la base de la nouvelle règle reçue ;

    dans lequel la mise à jour comprend :

    a) la définition (223) d'une variable X ;

b) X prenant la valeur

$$\left(r[C_n] - \left(\bigcup_{j=1}^{number\ of\ arcs} current\_node_{arcj}\right)\right) \cup \left(\left(\bigcup_{j=1}^{number\ of\ arcs} current\_node_{arcj}\right) - r[C_n]\right) \cup$$

de

$$\left(r[C_n] \cap \left(\bigcup_{j=1}^{number\ of\ arcs} current\_node_{arcj}\right)\right)$$

où ∪

représente l'opération mathématique d'union, ∩ représente l'opération mathématique d'intersection, current_node$_{arcj}$ représente les intervalles ou les sous-intervalles d'un arc j du noeud actuel au noeud de niveau n-1 et où

$$\left(r[C_n] - \left(\bigcup_{j=1}^{number\ of\ arcs} current\_node_{arcj}\right)\right),$$

$$\left(\left(\bigcup_{j=1}^{number\ of\ arcs} current\_node_{arcj}\right) - r[C_n]\right)$$

et

$$\left(r[C_n] \cap \left(\bigcup_{j=1}^{number\ of\ arcs} current\_node_{arcj}\right)\right)$$

sont des ensembles de l'opération d'union correspondant aux intervalles ou aux sous-intervalles des attributs conditionnels C$_n$ ;

c) l'utilisation (229) des ensembles de X pour former des arcs jusqu'aux noeuds de niveau n-1 de sorte que chaque ensemble est utilisé pour libeller un seul arc, dans lequel les noeuds de niveau n-1 sont identifiés par les règles correspondantes de sorte que chaque noeud est identifié uniquement par les règles remplissant la condition fixée par l'ensemble correspondant libellant l'arc conduisant au noeud correspondant.

2. Procédé selon la revendication 1, dans lequel la mise à jour comprend en outre :

d) déterminer (231) si n-1 est égal à 0 ; et
e) dans le cas où n-1 est égal à 0, l'ajout (233) de feuilles au niveau n-1 du noeud actuel, les feuilles étant identifiées par une règle ou des règles remplissant les conditions de l'ensemble libellant l'arc conduisant à la feuille correspondante.

3. Procédé selon la revendication 2, dans lequel la mise à jour comprend en outre :

f) dans le cas où n-1 n'est pas égal à 0 ou après avoir effectué l'étape e), déterminer (235) si tous les noeuds du niveau actuel n ont été traités, et si tel n'est pas le cas, répéter les étapes a) à d) jusqu'à ce que tous les noeuds du niveau actuel n aient été traités ; et
g) la décrémentation (239) de n par 1 puis la répétition des étapes a) à f).

4. Procédé selon la revendication 2, dans lequel la détermination à l'étape d) comprend le contrôle de tous les noeuds du niveau n+1, et la vérification que tous les arcs provenant du niveau n+1 ont été traités.

**5.** Procédé selon l'une quelconque des revendications précédentes, dans lequel le procédé comprend en outre le contrôle s'il y a au moins deux règles dans une même feuille, et si tel est le cas, la détermination qu'il y a au moins une anomalie de mauvaise configuration dans l'ensemble S de règles de sécurité.

**6.** Procédé selon la revendication 5, dans lequel une console est utilisée pour prévenir un administrateur des différentes anomalies une fois qu'une nouvelle règle est introduite.

**7.** Procédé selon la revendication 5, dans lequel le procédé comprend en outre l'avertissement d'un administrateur gérant le dispositif électronique pour le prévenir d'une anomalie et/ou la fourniture d'un ensemble de règles sans conflit.

**8.** Procédé selon la revendication 7, dans lequel la fourniture d'un ensemble de règles sans conflit comprend la prise en compte d'un ordre de priorité des règles et le choix de la règle dans une feuille avec la plus grande priorité, dans lequel les valeurs d'attributs correspondantes sont obtenues en partant de la racine et en prenant les valeurs d'attributs conduisant à la feuille actuelle.

**9.** Procédé selon la revendication 7, dans lequel la fourniture d'un ensemble de règles sans conflit comprend la détermination dans chaque feuille s'il y a au moins une première règle et une deuxième règle avec la même décision et, si tel est le cas, le choix parmi ces règles de la règle avec la plus grande priorité et, si la deuxième règle est précédée dans toutes les feuilles où elle est présente par une autre règle avec la même décision, elle est alors détectée comme étant complètement redondante, et dans lequel les valeurs d'attributs correspondantes sont obtenues en partant de la racine et en prenant les valeurs d'attributs conduisant à la feuille actuelle.

**10.** Procédé selon l'une quelconque des revendications précédentes, dans lequel, dans le cas où m est égal à 0, la mise à jour de l'arborescence de gestion de conflits comprend la construction d'une arborescence de gestion de conflits comprenant 1 niveaux de noeuds, 1 représentant le nombre d'attributs conditionnels de la règle r, les noeuds de différents niveaux étant reliés les uns aux autres par des arcs libellés par des intervalles ou des sous-intervalles des valeurs d'attributs conditionnels et les noeuds étant **caractérisés par** une règle ou des règles remplissant la condition fixée par l'intervalle ou le sous-intervalle libellant l'arc conduisant au noeud correspondant, l'arborescence de gestion de conflits ayant des feuilles à l'extrémité des arcs provenant du dernier niveau de noeuds, chaque feuille étant identifiée par une règle ou des règles remplissant la condition fixée par l'intervalle ou le sous-intervalle libellant l'arc conduisant à la feuille actuelle et étant en outre identifiées par une décision correspondante ou des décisions correspondantes.

**11.** Produit de programme informatique comprenant des instructions pour mettre en oeuvre toutes les étapes d'un procédé selon l'une quelconque des revendications 1 à 10 lorsqu'il est chargé et exécuté sur le moyen informatique d'un dispositif électronique.

**12.** Dispositif électronique capable de gérer des conflits de règles de sécurité en ligne dans un système de communication, dans lequel le dispositif électronique est agencé pour stocker un ensemble S de règles de sécurité $R_i$, et chaque règle comprenant une liste d'attributs conditionnels C et au moins une décision correspondante, la liste d'attributs conditionnels comprenant en outre m attributs conditionnels individuels $C_n$ identifiés par des intervalles correspondants de valeurs pour fixer une condition, où n est une variable identifiant différents attributs conditionnels dans une règle, le dispositif électronique comprenant :

- un moyen d'obtention, dans le cas où $m \geq 1$, d'une arborescence de gestion de conflits comprenant m niveaux de noeuds, les noeuds de différents niveaux étant reliés les uns aux autres par des arcs libellés par des intervalles ou des sous-intervalles d'attributs conditionnels et les noeuds étant identifiés par une règle ou des règles remplissant la condition fixée par l'intervalle ou le sous-intervalle libellant l'arc conduisant au noeud correspondant, l'arborescence de gestion de conflits ayant des feuilles à l'extrémité des arcs provenant du dernier niveau de noeuds, chaque feuille étant identifiée par une règle ou des règles remplissant la condition fixée par l'intervalle ou le sous-intervalle libellant l'arc conduisant à la feuille actuelle et étant en outre identifiée par l'au moins une décision correspondante ;
- une unité de réception pour recevoir une nouvelle règle à ajouter à l'ensemble S de règles de sécurité ; et
**caractérisé par**
- une unité de mise à jour pour mettre à jour en ligne l'arborescence de gestion de conflits sur la base de la nouvelle règle reçue, adaptée de sorte que la mise à jour comprend :

a) la définition (223) d'une variable X ;

b) X prenant la valeur de

$$\left(r[C_n] - \left(\bigcup_{j=1}^{number\ of\ arcs} current\_node_{arcj}\right)\right) \cup \left(\left(\bigcup_{j=1}^{number\ of\ arcs} current\_node_{arcj}\right) - r[C_n]\right) \cup$$

$$\left(r[C_n] \cap \left(\bigcup_{j=1}^{number\ of\ arcs} current\_node_{arcj}\right)\right)$$

où U représente l'opération mathématique d'union, ∩ représente l'opération mathématique d'intersection, current_node$_{arcj}$ représente les intervalles ou les sous-intervalles d'un arc j du noeud actuel au noeud de niveau n-1 et où

$$\left(r[C_n] - \left(\cup_{j=1}^{number\ of\ arcs} current\_node_{arcj}\right)\right),$$

$$\left(\left(\cup_{j=1}^{number\ of\ arcs} current\_node_{arcj}\right) - r[C_n]\right)$$

et

$$\left(r[C_n] \cap \left(\cup_{j=1}^{number\ of\ arcs} current\_node_{arcj}\right)\right)$$

sont des ensembles de l'opération d'union correspondant aux intervalles ou aux sous-intervalles des attributs conditionnels C$_n$ ;

c) l'utilisation (229) des ensembles de X pour former des arcs jusqu'aux noeuds de niveau n-1 de sorte que chaque ensemble est utilisé pour libeller un seul arc, dans lequel les noeuds de niveau n-1 sont identifiés par les règles correspondantes de sorte que chaque noeud est identifié uniquement par les règles remplissant la condition fixée par l'ensemble correspondant libellant l'arc conduisant au noeud correspondant.

FIG. 1

Obtain a conflict tree corresponding to a rule set $S$ with $m$ conditional attributes. ─201

Obtain a new rule $r$ to be added to the rule set $S$, $r$ comprising $m$ conditional attributes, $m$ conditional attributes forming a list $C$ of conditional attributes. ─203

205─ $r$ empty ?

Yes → Return a single node with value « failure ». ─207 → End.

No

213

No ← $T$ empty ? → Yes

209

Choose the current node to be the root at level $n$, where $n$ equals $m$ at this level.

Add $r$ to the current node of level $n$. ─215

211─ Return a conflict tree, $r$ being the only rule used for constructig the tree.

End.

217

List $C$ of conditional attributes empty? → Yes

No

221─ Define $C_n$ as being the $n^{th}$ attribute in $C$.

219

Return the obtained conflict tree.

223─ Define a variable $X$.

225─

$$X \leftarrow (r[C_n] - (\bigcup_{j=1}^{nb\_arcs} current\_node_{arc\,j})) \cup ((\bigcup_{j=1}^{nb\_arcs} current\_node_{arc\,j}) - r[C_n]) \cup (r[C_n] \cap (\bigcup_{j=1}^{nb\_arcs} current\_node_{arc\,j}))$$

From 239 ) Go to 227 ) From 237 )

FIG. 2a

EP 2 023 566 B1

From 225

Go to 217

Go to 223

Return X. —227

229

Use the sets of X for building the corresponding arcs from the current node to the level $n$-1 and add rule $r$ to the node of level $n$-1, if $r$ has contributed to generate this node of level $n$-1 from level $n$.

$n$-1=0 ?  —Yes→  233  The nodes of level $n$-1 generated from the current node correspond to leaves and taking values of different couples ($R_i$, $D_i$).

231  No

235  For the current level of $n$ all nodes have been dealt with ?  —No→  237  Proceed to the next node.

Yes

239— Delete $C_n$ from $C$; i.e. decrement $n$ by 1.

FIG. 2b

P:$\{r\}$

↓ any

sIP:$\{r\}$

↓ any

sP:$\{r\}$

↓ any

dIP:$\{r\}$

↓ [1-120]

dP:$\{r\}$

↓ [21-80]

$\{r\}$: accept

# FIG. 3

FIG. 4

# FIG. 5

FIG. 6

FIG. 7

EP 2 023 566 B1

FIG. 8

FIG. 9

FIG. 10

EP 2 023 566 B1

FIG. 11

$R_1$: Redundant
$R_2$: Redundant
$R_4$: Shadowed

dIP:$\{R_1, R_2, R_3, R_{34}, R_4, R_5\}$

[1-9] $\{R_3\}$ : accept
[10-19] $\{R_3\}$ : accept
[20-29] $\{R_3\}$ : accept
[30-39] $\{R_3\}$ : accept
[40-55] $\{R_3\}$ : accept
[56-80] $\{R_5\}$ : accept
[81-90] $\{R_5\}$ : accept
[91-110] $\{R_{34}\}$ : deny
[111-120] $\{R_{34}\}$ : deny
[121-130] $\{R_{34}\}$: deny

FIG. 12

dIP:$\{R_1, R_2, R_3, R_{34}, R_4, R_5\}$

[1-9] $\{R_3\}$ : accept
[10-19] $\{R_3\}$ : accept
[20-29] $\{R_1\}$ : accept
[30-39] $\{R_1\}$ : accept
[40-55] $\{R_1\}$ : accept
[56-80] $\{R_1\}$ : accept
[81-90] $\{R_1\}$ : accept
[91-110] $\{R_2\}$: deny
[111-120] $\{R_2\}$: deny
[121-130] $\{R_{34}\}$: deny

EP 2 023 566 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060294577 A

**Non-patent literature cited in the description**

- **EHAB S. AL-SHAER ; HAZEM H. HAMED.** Discovery of Policy Anomalies in Distributed Firewalls. *IEEE INFOCOM,* 2004

- **F. CUPPENS ; N. CUPPENS-BOULAHIA ; J. GARCÍA-ALFARO.** Detection and Removal of Firewall Misconfiguration. *IASTED International Conference on Communication, Network and Information Security,* 2005